# EUROPEAN PATENT SPECIFICATION

(11) **EP 3 046 642 B1**
(45) Date of publication and mention of the grant of the patent: **15.11.2017**
(21) Application number: 14771538.7
(22) Date of filing: 16.09.2014
(51) Int. Cl.: B01D 3/06, B01D 3/34, B01D 53/14

(54) **METHOD AND SYSTEM FOR IMPROVED PURIFICATION OF DESICCANTS**
VERFAHREN UND SYSTEM ZUR VERBESSERTEN REINIGUNG VON TROCKNUNGSMITTELN
PROCÉDÉ ET SYSTÈME POUR PURIFICATION AMÉLIORÉE D'ABSORBEURS D'HUMIDITÉ

(30) Priority: 16.09.2013 NO 20131245
(43) Date of publication of application: 27.07.2016
(73) Proprietor: Fjords Processing AS, 1327 Lysaker (NO)
(72) Inventor: EL BOUZIDI, El Houssain, Dubai (SA)
(74) Representative: Onsagers AS
(86) International application number: PCT/EP2014/069690
(87) International publication number: WO 2015/036614

(56) References cited:
- WO-A1-2012/171554
- US-A- 4 460 383
- US-A- 5 145 658
- US-B1- 6 685 802

## Description

The present invention relates to an improved method and system for purification of hydrophilic desiccants. Especially the present invention relates to desiccant regeneration system for use in combination with a gas dehydration facility.

### Background

Purity of desiccants used for dehydration of gaseous streams is of great importance as this improves the quality of the dehydrated gas and the size of associate process equipment. This invention relates to any suitable liquid desiccant, such as glycols such as triethylen glycol (TEG), diethylen glycol (DEG), and mono ethylen glycol (MEG) etc.

There are physical limitations to the degree of purification of desiccants such as TEG that can be achieved by only evaporation by adding heat. This is due to that the boiling point temperature of high concentrated TEG exceeds the degradation temperature. Hence stripping gas (e.g. hot fuel gas) is often used as a polishing process after an evaporation step. The combination of the evaporation and one or more stripping gas steps have demonstrated to be a relative effective system configuration, but have the drawbacks of being large in size, and with limitation of stripping gas efficiency and consumption, and also with a risk of degeneration of the TEG and fouling of the heater, where the degeneration of TEG ultimately will lead to TEG losses.

Accordingly there is a need for a more compact method and system which results in reduced losses of desiccant due to degeneration.

### Prior art

Different technical solutions have been developed to purify desiccants, and evaporate liquids in general. Examples of these techniques are disclosed in US6004380, US5766423A, US5501776A, US8491712B2 and US5145658A.

US6004380, US5766423, and US5501776 disclose desiccant recovery using the steps evaporation and then stripping gas.

US8491712B2 discloses a method utilizing a reflux coil within a stripper combined with a traditional reboiler with predominantly stagnant conditions.

US5145658A discloses a process and apparatus for recovering heat reaction energy from an alkaline scrubbing solution used in acid gas removal including steam stripping. The apparatus comprises a regenerator. The scrubbing solution exits the bottom of the regenerator and enters above, in between exiting and entering the scrubbing solution is processed by a reboiler with predominantly stagnant conditions. Also disclosed is heating a scrubbing solution taken from the regenerator by heat exchange with a hot stream before it re-enters the regenerator.

US4460383 A discloses a method of and apparatus for reconcentrating a liquid absorbent in an absorption system which method includes the steps of heating the rich liquid absorbent in a heating zone to vaporize a portion of the solute therefrom, flashing the partially reconcentrated absorbent into a flash separator and separating the lean liquid absorbent from the flashed vapors in the flash separator with the lean liquid absorbent being recycled to the absorption system and with the separated vapors being cooled to condense liquids and returning the stream of condensed liquids and vapors to the heating zone.

To prevent thermal degradation of the desiccant such as glycol the reboiler temperature conventionally is limited to approximately 205°C (400F) or less, but still some degeneration may occur when the glycol is maintain over long time at such high temperature. For Pure TEG (>99 weight-%) a temperature of up to 240°C may be applicable without resulting in degeneration of the TEG.

In order to add heat (heat transfer) to the glycol in a conventional reboiler the heat surface must have an even higher temperature and this together with predominantly stagnant condition, makes degeneration of the glycol a significant problem. Just heating to the high temperature 205°C will not result in the glycol being at the high concentrations desirable, that is why conventional systems in a subsequent step utilize the addition of stripping gas that lowers the partial pressure of water in the system and thereby increases the stripping of water from the desiccant. However at that point in the process the degeneration of glycol already has taken place in the reboiler.

### Objectives of the invention

The aim of the present invention is to provide a method and system which improves concentration and purity of desiccants and reduces desiccant losses.

It is also an aim to provide a system which is more compact, having a smaller areal foot print and preferably therefore also resulting in reduced equipment costs. Another goal is to provide a system comprising more reliable equipment.

A further aspect is to provide a system and method which results in desiccant of higher purity.

A further goal is to provide a system and method with reduced loss of desiccant due to degeneration.

It is also an intention to provide a system and method which results in a reduction of the amount of stripping gas required to perform the purification.

The present inventors have come up with solutions to reach one or more of these goals.

The present invention provides a desiccant regeneration system comprising
- a vertical purification column comprising
   - a distillation section,
   - a rich desiccant inlet below the distillation section, a stripping gas and vapour outlet above the distillation section and a liquid outlet at the bottom part of the purification column,
- a first heat exchanger for heating a rich desiccant stream upstream the a rich desiccant inlet,
wherein the system further comprises
- a recycle pump comprising an inlet in fluid communication with a first liquid level in said column below the rich desiccant inlet and comprising an outlet,
- a recycle heater with an inlet in fluid communication with the outlet of the recycle pump, and a recycle heater outlet in fluid communication with said purification column via a recycle conduit, and
- a valve or orifice on said recycle conduit such that fluid recycled through the recycle heater is depressurized before entering said purification column
wherein the system comprises
- a fuel gas stripping section with a fuel gas inlet, a stripping liquid inlet, a stripping liquid outlet and a stripping gas outlet, wherein the stripping liquid inlet is in fluid communication with the recycle heater outlet, the stripping liquid outlet is in fluid communication with the liquid outlet at the bottom part of the purification column, and the stripping gas outlet is in fluid communication with the regenerator column below the distillation section.

In a further aspect of the present invention the system further comprises a second heat exchanger for further heating the rich desiccant stream and cooling at least a part of a liquid stream from the outlet in the bottom of said purification column, wherein the second heat exchanger is in fluid communication with the rich desiccant inlet and in fluid communication with the bottom liquid outlet. According to this aspect heat is transferred from the purified desiccant obtained to the rich desiccant heated in the first heat exchanger arranged upstream the second heat exchanger.

In yet another aspect the system comprises fuel gas heating means for heating fuel gas upstream the fuel gas stripping section, wherein the fuel gas heating means is arranged for heat communication with recycled heated liquid returned to the purification column.

In yet a further aspect of the desiccant regeneration system the fuel gas heating means are arranged for heat communication with liquid within the bottom part of the purification column.

In another aspect of the desiccant regeneration system the fuel gas heating means are arranged in heat communication with liquid at a liquid level above the level of the bottom liquid.

In yet another embodiment of the desiccant regeneration system according to the present invention the system comprises means for maintaining a bottom liquid level at the bottom part of the purification column.

In a further aspect the stripping section is arranged in the lower part of regeneration column below the recycle heater outlet and above the bottom liquid level.

In yet another aspect the column comprises at least one chimney tray arranged above the stripping section and below the recycle heater outlet, such that stripping gas is passing through the chimney, and comprising a conduit for liquid passing down to a level below the chimney.

In yet another aspect the bottom of the chimney tray is the bottom of a second liquid level and where the conduit for liquid passing down is protruding substantially above the bottom of the chimney, where the top of the conduit will be a top level of the second liquid level.

In one aspect of the present invention the first liquid level is equivalent to the second liquid level, whereas in another aspect the first liquid level is the bottom liquid level.

In a further aspect of the desiccant regeneration system the column further comprises a desiccant compartment below the chimney tray comprising an overflow into the stripping section, where the overflow preferably comprises a distribution system evenly distributing the overflow across the area of the stripping section. The fuel gas heating means are arranged in the desiccant compartment in one aspect of the invention.

In yet another aspect the system comprises a top gas compression, cooling and separation system with an top gas inlet in fluid communication with the top gas outlet and a separated fuel gas outlet in fluid communication with the fuel gas inlet of the stripping section such that the fuel gas can be recycled.

In an additional aspect the regeneration system comprises a filter in fluid communication with the liquid outlet at the bottom part of the purification column.

The purity of the liquid at the bottom part of the purification column in a system according to the present invention is above 99.3 w/w %.

In a further aspect the system further comprises a surge drum in fluid communication with at the bottom part of the purification column and where the surge drum volume size is smaller than the volume of the purification column below the position of the end of the recycle conduit providing fluid communication with the purification column. , preferably the surge drum volume size is in the range 1/4-1/8 times the purification column volume size below the position of the end of the recycle conduit providing fluid communication with the purification column.

In yet another aspect the purification column comprises a vacuum generating system downstream the stripping gas and vapor outlet above the distillation such that the column can be operated at below atmospheric pressure.

In a further aspect the system further comprises a system that significantly reduces the footprint of the necessary equipment as the multiple system vessel components can be vertically orientated, preferably all integrated into one column. The column might comprise a body flange in between any of the system vessel components in the column for enabling easier assembly, service and modification. The various system vessel components are described in the section "Principal description of the invention".

A further aspect of the invention also comprises a significantly reduced cross sectional area of the equipment where the evaporation heat is added to a rich desiccant stream and where evaporation water from rich desiccant occurs. This is enabled by open (mixed flow) heating provided by a recycle loop of desiccant heated externally of the column. A further feature of this system is that the ratio between the cross sectional area/footprint of the external heater where the evaporation heat is added and the cross sectional area/footprint of the stripping section is less than 2, preferably less than 1.5, even more preferably less than 1.1, even more preferably less than 1, even more preferably less than 0.9. Prior art add heat in a closed horizontal reboiler, but as the present invention uses open (mixed flow) heating provided by a recycle loop of desiccant heated externally, there are no requirements for evaporation surface where the desiccant is heated externally. In fact the desiccant is pressurized in the external heating to avoid boiling, as boiling is a disadvantage for the external heating process. As the invention preferably allows for much higher temperature of the desiccant to be purified, it is very important to control the temperature and heat transfer, as boiling conditions would be very disadvantages.

The open heating requires a desiccant heating fluid having an higher temperature than the rich desiccant entering from above, and by laws of physics (vapour pressure) in order for a desiccant heating fluid to obtain an higher temperature than the temperature inside the column, the desiccant heating fluid needs to be heated at an higher pressure than the pressure inside the column, to obtain this an orifice or pressure reduction valve is to utilized in the process line downstream the recycle heater but before the recycled desiccant is returned to the column.

The heat transfer in the external heating process including an electrical process heater is preferably equipped with control so that added heat is controlled to a reference temperature in the evaporation section. To avoid boiling the pressure in the external heater is preferably above 0.5, 1.5, 2, 3, 3.5, 4 or 5 bara.

The present invention further provides a method for regeneration of desiccant thereby obtaining a purified desiccant stream from a rich desiccant stream, comprising
- heating the rich desiccant stream with heat exchange with a top gas stream,
- flashing the heated rich desiccant stream by feeding the heated desiccant stream to a vertical purification column via a rich desiccant inlet, resulting in a the top gas stream and the bottom liquid stream, wherein
the method comprises
- pressurising a portion of the bottom liquid in a recycle pump, obtaining a pressurised stream;
- heating the pressurised stream in a non stagnant recycle heater, obtaining a heated pressurised stream;
- depressurising the heated pressurised stream, obtaining a depressurised heated stream;
- feeding the obtained depressurised heated stream as a recycle stream back into the purification column at a level between the rich desiccant inlet and a bottom liquid level, such that the depressurised heated stream is mixed with the rich desiccant stream such that heat is transferred from the depressurised heated stream to the rich desiccant stream; and
- obtaining a portion from the bottom liquid as the purified desiccant stream,
- wherein the method comprises stripping a liquid obtained by the flashing of the rich desiccant stream with a heated fuel gas and flashing the recycle stream, and also stripping a liquid obtained from the flashed recycle stream with the heated fuel gas.

In another aspect of the method according to the present invention the mass flow of the recycle stream compared to the obtained purified desiccant stream is between 1:1 and 5:1, preferably between 1.5:1 and 3:1.

In yet another aspect the temperature of the heated recycle stream is between 20-50°C preferably 25-40°C higher than the temperature of the rich desiccant stream being fed to the column.

In yet a further aspect the method comprises heating the fuel gas with by heat transfer from a liquid stream from the regenerator, preferably the bottom liquid or the liquid from the flashed recycle stream.

In another aspect the purity of the bottom liquid is above 99.3 w/w %.

In yet another aspect the mass flow of fluid being stripped compared to the mass flow of obtained purified desiccant stream is between 1:1 to 3:1 preferably between 1.5:1 and 2.5:1.

In a further aspect of the method the purification column is operated at below atmospheric pressure.

Desiccant regeneration system according to the present invention may comprise a surge drum who's volume size is not able to contain more liquid than approximately could be drained from the regenerator system when not running, this being significantly small as the system uses a recycle heating system, preferably the surge drum volume size is in the range 1/4-1/8 times the regenerator column volume size.

In one aspect of the present invention the desiccant is TEG.

The present inventor have surprisingly found that by using recycle heating and feeding heated fluid into a regenerator at upstream a stripping gas section the concentration of the desiccant can be improved over prior art solutions using stripping gas. Especially when the flow rates, pressure and temperature of the feed, recycle heating and stripping gas are within specific ranges, this is particular advantageous way to purify the desiccant.

This is due to multiple synergetic effects occurring, for example such as:
1) Due to the significant recycling, the fluid downstream the stripping gas section is already purified by gas stripping, hence the stripping gas section will be more an extra polishing step.
2) Due to the flashing of the heated recycle stream upon entry into the regenerator, the liquid on the chimney tray and in the desiccant compartment will have a higher degree of purity compared to a conventional configuration with a horizontal reboiler.
3) The recycled heated evaporated desiccant will mix with the stripping gas, hence improving an additional stripping taking place above the recycle inlet, which again results in more pure desiccant entering the stripping section below in a process that reiterates to a steady state of a more pure desiccant below the stripping section,
4) As the recycle heating is not stagnant it can allow for some higher temperature of the desiccant and that with reduced degeneration, as degeneration is a function of the time the desiccant is exposed to the heating surface.
5) In a preferred embodiment a chimney tray that enables heated fluid to be fed to a level above the last stage stripping gas section without clogging the last stripping gas step, also will have hats that ensure a good mixture of stripping gas coming up with the fluid above, which further improves the additional stripping taking place above the recycle inlet.
6) As the use of the stripping gas will be more efficient, less stripping will be necessary compared to a conventional configuration with a horizontal reboiler, which reduces the gas amount flowing through the still column, hence less risk for desiccant carry over and or still column can be sized smaller.
7) The desiccant will pass through the stripping sections in multiples, but still only one stripping section is utilized, hence one achieves multiple stripping steps in the size of on stripping section.
8) Subjected an adequate mixing the heat transfer of the liquid phase coming down from the rich desiccant mixing with the hot flashed liquid stream from the recycle conduit (hereinafter also referred to as open heating) will be much more space effective than convection through a metal surface under same mass flow conditions (fluid properties, m³/h, delta temperature etc.). By convection through a metal surface is meant heating using a reboiler with shell and tube side, or even an electrical heater where heat is added through metal surface. The efficient heat transfer of open heating enables heating of the liquid phase coming down in a in column in the same section of the column where stripping gas flow enters from a stripping section below.
9) The stripping gas from the stripping section will contribute to the water evaporation in the open heating section, due to some heat transfer and as it will reduce the partial pressure of the vapour, and since the open heating results in reduced space, the partial pressure of stripping gas will even be larger and the vapour pressure by laws of physics will be accordingly lower. Hence there will be synergetic effects of the small volume achieved by the open heating from the recycle heater. The use of recycle heater and the desiccant compartment reduces the volume where gas/vapour /stripping gas can be mixed in, hence further improves the effect of the stripping gas, based on the law of partial pressure (Dalton's law).
10) Simultaneously the circulated heating by the recycle heater allows the heat transfer to be much more compact per volume compared to a conventional reboiler heater as it enables a larger delta temperature (temperature difference) and more turbulent condition etc. The higher delta temperature is archived by two effects a) temperature drops at open heating b) a higher heater surface temperature can be allowed with respect to degradation, as the desiccant exposure time on heat surface is reduced by the forced recycle flow.

In addition, using recycle heating, heat can be added to the desiccant more efficiently thereby significantly reducing the degradation of desiccant and the size of the equipment. Less degradation is achieved due to that a lower temperature difference between the heating surface and the desired temperature is required, and less size is achieved as one can use lower fouling factor when sizing heaters.

The term "rich" as used herein describes the desiccant or glycol stream comprising significant amounts of water. The rich desiccant may further also comprise hydrocarbons absorbed from the hydrocarbon gas by the desiccant during the dehydration process.

The term "lean" as used herein refers to the desiccant or glycol stream which the capability to absorb water vapour. Preferably the lean glycol is a regenerated and purified glycol comprising at least 97 w/w % glycol, preferably at least 98 w/w % glycol, more preferably at least 99 w/w % glycol and even more preferably at least 99.1 w/w % glycol. High purity glycol comprises at least 99.9 w/w % glycol, extreme high purity glycol comprises from 99.9 w/w % glycol to 99.99 w/w % glycol. Further the lean glycol in a preferred embodiment comprises limited concentration of glycol degeneration residues, preferably less than 0.1%, more preferably less than 0.05%, more preferably less than 0.03%, even more preferably less than 0.01 w/w % glycol degeneration residues.

The term "orifice" as used here shall include any suitable device/design for reduction of the fluid, such as narrowing of the pipe diameter, restriction orifice, venturi, pressure reduction valve etc.

The term "fuel gas" as used here shall include any suitable gas for stripping, for example natural gas, nitrogen etc.

The term "column" as used here refers to a volume structure with a predominately vertical axis. The diameter and shape of the column may vary over the height thereof.

The present invention will make equipment more reliable, compact, improve concentration and purity of desiccants and reduce desiccant losses.

In one embodiment of the aspect of the present invention involving a chimney tray, the height of the chimneys are increased compared the traditional chimneys, the height of the chimneys is preferably larger than 1/5 of the diameter of the tray.

The present invention can be used in combination different structures for influencing the flow patterns of the flashing and non-flashing streams such as tangential inlets, venturies, vapour horns etc. without departing from the scope of the present invention.

### Brief description of the drawings

The present invention will be described in further detail with reference to the enclosed figures where
Figure 1 illustrates an example of a system for gas drying with regeneration of the desiccant according to an embodiment of the present invention;
Figure 2 schematically illustrates a second embodiment of the present invention;
Figure 3a and 3b schematically illustrates three alternative configurations of the fuel gas heating;
Figure 4 schematically illustrates details of a regenerator according to the present invention;
Figure 5 schematically illustrates yet another alternative configuration of the regenerator according to the present invention;
Figure 6a and 6b schematically illustrates an alternative embodiment of the regeneration system;
Figure 7 schematically illustrates a regeneration system with limited emissions;
Figure 8 schematically illustrates yet another alternative regeneration system;
Figure 9 schematically illustrates a system for gas drying with regeneration of the desiccant according to an embodiment of the present invention during start up;
Figure 10 schematically illustrates a regeneration system according to the present invention with a tray;
Figure 11 schematically illustrates an alternative embodiment of a regeneration system similar to figure 10 where downcommers have protruding overflow heights and optionally staggered overflow heights;
Figure 12 schematically illustrates an alternative embodiment of a regeneration system similar to figure 10 where an offtake of the heated recycle fluid is used in a heat exchanger to preheat of the rich desiccant;
Figure 13a, 13b and 14 illustrates a CFD (computational fluid dynamics) analysis of the temperature distribution of the liquid in the mixing of open heating
Figure 15 schematically illustrates an alternative embodiment where an offtake of the heated recycle fluid is also used for extra high temperature preheating of the stripping gas and or extra high temperature preheating of the rich desiccant; and
Figure 16 schematically illustrates an alternative embodiment similar to figure 8, wherein an offtake of the heated recycle fluid is also used for extra high temperature preheating of the stripping gas and or extra high temperature preheating of the rich desiccant.

The figures illustrate the main elements of the regenerators and regenerator systems according to the present invention. For the sake of clarity many valves, pressure and level control systems and equipment for maintenance, detail start up and shutdown has not been included. A person skilled in the art will based on his common general knowledge be well aware where such additional equipment may be included.

### Principal description of the invention

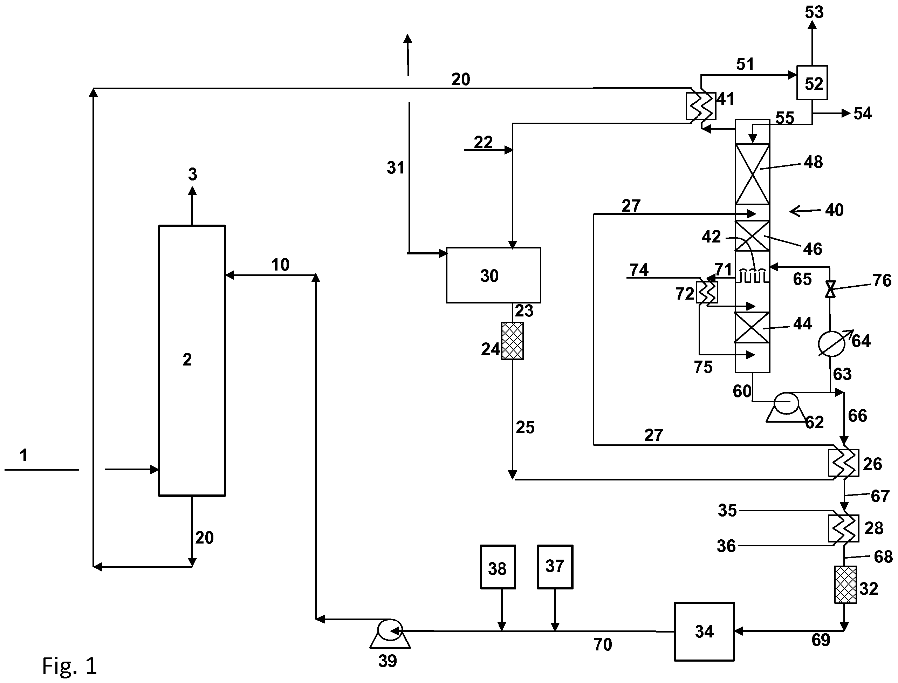

The present invention will now be discussed in further detail with reference to the enclosed figures. The figures are schematic illustrations of embodiments of systems and methods according to the present invention. A person skilled in the art will understand that details such as instrumentation, control systems, valves, supply of heating and cooling media etc. are omitted to better illustrate the main principles of the present invention. In the figures equal reference signs are used to refer to equal elements. Figure 1 shows a one embodiment of the present invention together with a gas dehydration system to illustrate the relationship between the present invention and the gas dehydration. The figure illustrates one of many possible processes and it will be appreciated that the present invention is equally applicable for use with other such processes.

The wet gas stream 1 enters the desiccant contactor 2 and leaves the contactor as dry gas 3. Lean desiccant enters through line 10 and leaves as rich desiccant stream 20. The rich desiccant solution is loaded with water and dissolved hydrocarbons. In the desiccant contactor water is transferred from the as stream to the desiccant stream according to well known process based on conventional technology.

Accordingly any known contactor can be employed to obtain the contact and thereby transfer of water/water vapour. The main focus of the present invention is the purification and regeneration of the rich desiccant 20 to obtain a lean desiccant 10 applicable for reuse.

The rich desiccant 20 is heated in cross heat exchanger 41 and supplied to rich desiccant flash drum 30 via line 21, if necessary lean desiccant make up can be added via line 22. The pressure of the flash drum is controlled and flashed gas comprising water vapour and hydrocarbons is removed via line 31 and past unto a low pressure flare or similar. During start up the line 31 may be used to adjust the pressure within the system by supplying fuel gas there through. The liquid phase of rich desiccant leaves via line 23 and may optionally be past though a filter 24 for removal of solid particles before is as stream 25 is past through cross heat exchanger 26 for further heating. The heated rich desiccant 27 will be heated to a temperature high enough to result in considerable flashing at or before the stream 27 enters the regenerator 40. The rich desiccant inlet is positioned in the upper section of the regeneration column. The water vapour that flashes or has flashed at this point will move upwards through the distillation section 48 and leave over the top. The section 48 may comprise a top structured packing. In the embodiment illustrated on figure 1 the top vapour stream is removed from the regenerator, cooled by heat exchanged with the rich desiccant in heat exchanger 41. The cooled top stream 51 is separated into a gas stream 53 which is send to a low pressure flare or similar and a liquid stream in separator 52. Water is removed as stream 54 whereas the rest of the liquid phase is return to the regenerator as reflux stream 55. Examples of alternative configurations of the top section will be discussed in connection with the other figures.

The flashing of the rich desiccant stream 27 at entry into the regenerator results in the liquid part of the stream moving downwards through the column from the rich desiccant inlet is significantly purified and can be characterised as semi-lean. The regenerator may optionally comprise a middle section 46 optionally filled with structured packing through which the semi-lean desiccant flows down and is collected by a chimney tray 42 arranged below the middle structured packing 46. From the chimney tray 42 the liquid desiccant flows down into the stripping section 44 of the regenerator and the lean desiccant leaves the bottom of the column trough conduit 60. In the stripping section 44 stripping gas comprising fuel gas enters through stripping gas inlet 75 in the lower part of the stripping section and the fuel gas passes counter currently up trough the stripping section and further up through the middle section and the top section as part of the gas flow. The fuel gas stream 75 is preferably heated to a temperature effective for stripping of the lean desiccant in the stripping section of the regenerator, for stripping of TEG this temperature is preferably 140-160°C, more preferably 145-155°C, alternatively close to the temperature of the lean desiccant. In figure 1 heating of fuel gas 74 is performed in heat exchanger 72 by heat exchange with a stream of lean desiccant 71 taken from the chimney tray and which stream is returned to the regenerator below the chimney tray 42. This is only one possible embodiment for heating the fuel gas and other alternatives will be described in connection with the other figures. The function of the fuel gas to increase the purification is well known to a person skilled in the art and for instance described in the prior art disclosed above.

The liquid desiccant is collected at the bottom of the regenerator 40 and equipment to control the liquid level therein is normally installed to secure that the liquid level is below the stripping section 44 and that the conduit 60 is always liquid filled to keep the pump 62 liquid filled. Preferably the flow rates, pressure and temperature of the feed, recycle heating and stripping gas are controlled within specific ranges to obtain optimal effect of the present invention. Lack of control may result in fuel gas causing carry over desiccant through the regenerator 40, to much recycle and or feed flow may flood the chimney section and or stripping gas section, which will disable the whole purification process, for instance if stripping gas would be entrained into the pump 60, this would cause cavitation of the pump and or the desiccant will not achieve the desired concentration levels. In addition, the liquid level control is an preferable feature of the recycle pump 62, as this will further avoiding entrainment of gas and cavitation, which again improves the effect of using recycle heating and feeding heated fluid into a regenerator at a position upstream a stripping gas section.

Furthermore by heating the fuel gas stream 74 by heat exchanging with the stream of lean desiccant 71, the resulting temperature of the lean desiccant leaving the bottom of the column trough conduit 60 is below the boiling temperature, hence further enabling the use of the recycle pump without cavitation. Also here combination of the flow rates, pressure and temperature of the feed, recycle heating and stripping gas being within specific ranges, are preferable as they secure the use of the pump without cavitation. Special purpose pump such as low speed or variable speed drive pump may also be utilized in combination with the above-mentioned level control, heat exchange and specific ranges of flow rates, pressure and temperature of the feed, recycle heating and stripping gas.

Downstream the pump 62 the lean desiccant stream is split into a reboiler stream 63 and a purified desiccant stream 66.

The reboiler stream 63 is heated in heater 64 and returned to the regenerator 40 as stream 65 above the chimney tray 42. The heater 64 is preferably a vertical heater with no or limited stagnant flow conditions. A valve or orifice 76 is provided in the recycle conduit leading the heated reboiler stream back into the column 40. The valve 76 provides for increased pressure within the heater thereby allowing for increased temperature without generation of vapour (boiling) within the heater. The lean desiccant is heated above the flashing temperature resulting in flashing of water vapour down stream the valve. Upon entry to the regenerator as stream 65 above the chimney tray but preferably below the rich desiccant inlet 27, the water vapour will follow the gas stream upwards through the middle section 46 and the top distillation section 48. Due to the heating in heater 64 the stream 65 will have a higher temperature than the rich desiccant stream 27. The stream 65 will mix with the liquid part of the stream 27 and thereby heat this stream and provide the heat required to evaporate water that has not yet been evaporated. Additional heat is required as the stream it self does not contain enough latent energy to obtain sufficient purification. The employment of a non-stagnant heater combined with flow velocities that secures non-stagnant conditions allows for increased temperatures without increased degeneration of the desiccant as the formation of hot-spots is eliminated or very limited.

The orifice or control valve 76 in line 65 is preferably utilized between heater 64 and entry to the regenerator 40, enabling heating at a higher pressure than the pressure in the regenerator 40, hence allowing to increase the temperature of the fluid in the heater without boiling, and also improving the flashing when entering into the regenerator. Said orifice or control valve 76 furthermore has the advantage that it enables heater to operate relatively high pressures while the regenerator 40 to operate at low pressures, even at below atmospheric pressure (vacuum condition), which will lower the evaporation temperature of the glycol significantly and also reduce the amount of stripping gas required.

Compared to a traditional reboiler the non-stagnant heater has the advantage of a much smaller cross sectional area or footprint. In a traditional reboiler the evaporation is related to the surface area of the liquid phase within the reboiler and the horizontal cross section accordingly has to be adapted to the need of evaporation surface. In a traditional reboiler the heating element is arranged in the liquid phase and heat is transferred from the surface of the element to the liquid surrounding the element. Also in a traditional reboiler the liquid is more or less stagnant and the allowable surface temperature of the heating element can not be increased above the degeneration temperature of the desiccant.

By using a recycle heater the heating of the liquid phase coming down from the rich desiccant inlet is instead done by mixing it with the hot flashed liquid stream from the recycle conduit, this takes place in an open area within the column thereby limiting vapour entrapment.

Alternatively (not shown), the stream 65 can be mixed with the desiccant inlet line 27, and then this mixture is flashed into the regenerator. The flashing streams 65 and or 27, or the combined flow of these, has in one embodiment of the invention (not shown) a feed into a section of the regenerator 40, in which section of the regenerator 40 has an increased diameter to increase the flashing volume.

Another important feature of a preferred embodiment of the invention is the use of stringent control of added heat to flow 63 in heater 64, preferably controlled against maintaining a targeted temperature in the liquid phase 71 above the stripping section which gives thermodynamic control in the core part of the purification process according to the invention, where all the complex and synergetic aspects take part, furthermore this also ensures constant temperature of lean desiccant 71 that transfers heat to the fuel gas stream 75, via cross heat exchanger 72, this means that one can easily control the heating of stripping gas by a flow control of stripping gas. For extra temperature control of added heat to flow 63 in the heater 64, preferably an electrical process heater is preferred instead of a conventional shell and tube heater. Preferred max fluctuation of the temperature of the liquid phase 71 is +/- 1.0°C, more preferably +/- 0.5°C, even more preferably +/- 0.2°C. Considering the desiccant feed to the regenerator may have fluctuation in wetness as humidity in produced gas may fluctuation, consequently the needed added heat for evaporation of the water will vary accordantly. In a process according to the invention with a strict and rapid temperature control such fluctuations are handled well. In a system without this type of control the fluctuations must be controlled otherwise as these could otherwise quickly lead to malfunction of the process, such as flooding of chimney tray, carry under of fuel gas to circulation pump, reduced concentration of achieved desiccant from the process etc.

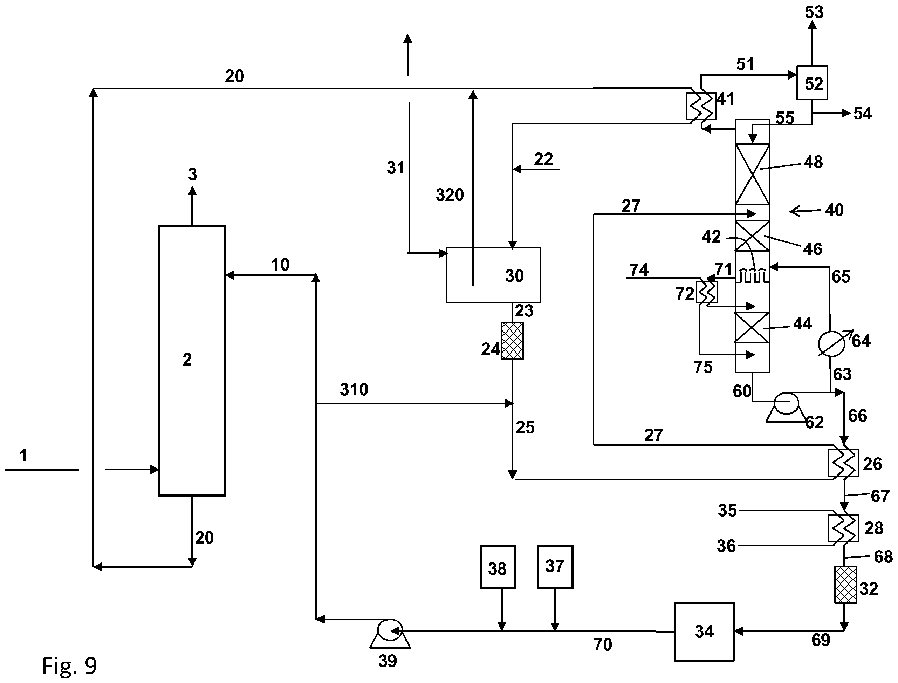

The temperature control of desiccant as specified also allows for a gradual start-up, with controlled delta temperature under this gradual start-up further reducing degradation under start up. The fact that gradual start-up is enabled also allows for reduced buffer tank capacities upstream and or downstream the generator. In addition to the temperature control, a variable speed drive pump 62 is a possible key for obtaining this feature. Now referring to figure 9, this figure illustrates a similar system as figure 1 but here with some examples of start-up process lines 320 and 310, respectively replacing the flow of the process lines 20 and 10, for so to gradually reduce the flow of process lines 320 and 310 and instead increase flow of process lines 20 and 10, until flow is process lines 320 and 310 is closed and the process lines 20 and 10 a fully open, i.e. running normally. By such gradually start-up the necessary heating and cooling mediums in cross heat exchangers used will also be brought to normal operating condition.

Now referring to figure 1 again, other benefits of electric process heater other than the temperature control is that due to thyristor control having 100% turn down capacity, enabling better operating control, including shut down and start-up. In addition it is more efficient and more compact.

What is special in this the preferred embodiment is that electrical heating applied has short response time, and it can be measured against liquid at a different place than the inlet to the heater such as liquid 71. Because the desiccant fluid feed to the electrical heater is at a higher pressure than the rich desiccant in the purification column, it can have an increased temperature without causing boiling and potentially disrupt the performance of the heater, where the increased temperature of the desiccant fluid in the next step is directly heating (open heating) the rich desiccant. The valve or orifice enables a higher pressure to be maintained in the electrical heater. The measurement of the temperature of liquid 71 ensures enough open heat. If the temperature measurement to be used to control the heater instead had been performed at the outlet 60 downstream the stripping section the purification would have been difficult to regulate. Especially in one embodiment where the desiccant is cooled when stripping gas is heated by cross heat exchange.

Due to the synergetic process, where heating is done at relatively low delta temperature with reduced fouling situation, the invention may also encompass the use of compact plate evaporator instead of an electrical heater, such as AlfaVap commercial available by Alfa Laval.

The purified desiccant stream 66 is cooled in heat exchanger 26 by heat exchange with the rich desiccant 25. The obtained cooled purified desiccant stream 67 is cooled further in cooler 28 by a cooling medium such as cooling water 35, 36. The obtained further cooled desiccant 68 is filtered trough filter 32 to remove any degraded desiccant. All purified desiccant passes the filter 32 before being returned to the dehydrater/contactor 2, which results in increased purity compared to prior art solutions where all filtering is performed on the rich desiccant upstream the regenerator. A further advantage of this configuration is that the stream being filtered is free of hydrocarbons that are known to show a tendency for clogging the filters employed in dehydration systems.

Downstream the filter 32 the purified desiccant enters the surge drum 34. In the conventional solution comprising a horizontal reboiler the volume of the surge drum would be determined by the volume of the reboiler as for the purpose of cleaning the reboiler the content thereof would have to be emptied into the surge drum. In the present invention the non-stagnant heater requires less cleaning by to the flow conditions therein but also comprises a smaller volume and the volume of the surge drum may therefore be reduced resulting in a more compact system.

In conventional desiccant purification systems using a filter downstream the regenerator and upstream the surge drum has not be consider possibly because these systems quickly would clog up by degenerated desiccants. Instead filtering is done upstream regenerator, and the periodically operational stop for cleaning and dump of accumulated degenerated desiccants into the surge drum. The conventional solutions hence leads to more downtime and cleaning operation, more loss of degenerated desiccant, desiccant loss of purified desiccant when dumping into the surge drum, and the need for a significantly larger surge drum. In addition the conventional process would lack the extra filtering step downstream the regeneration which in accordance of the current invention already have very low portion of degenerated desiccant. Preferably the filter 32 is a charcoal type filter, but any other suitable filter type may be used.

The purified desiccant leaves the surge drum 34 via line 70 and is circulated back to the contactor 2 as stream 10 by circulation pump 39. If necessary a pH control additive 37 and or an anti foaming additive 38 are added before the purified desiccant enters the circulation pump 39.

On figure 1 the stripping section is illustrated as being included in the lower part of the regeneration column, but it is equally applicable for instance due to height restrictions to perform the stripping in a separate stripping unit transferring all the streams to and from the stripping unit via applicable conduits.

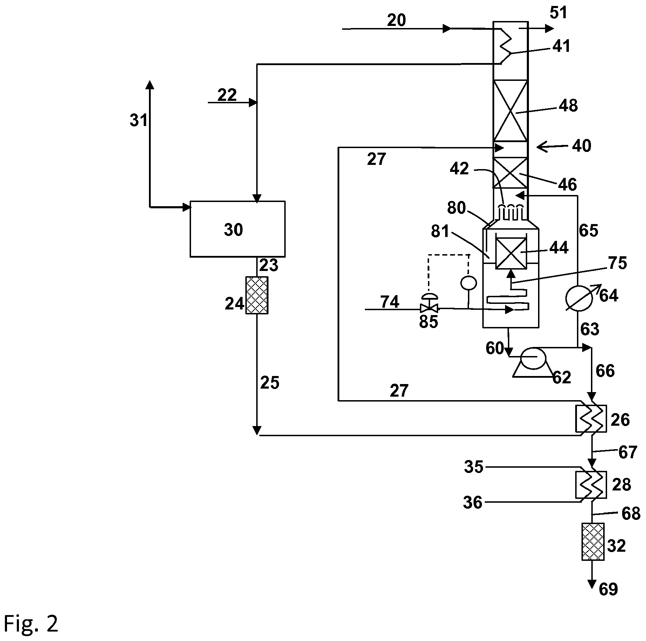

Figure 2 illustrates a second embodiment of the regenerator system according to the present invention. In this embodiment the heat exchanger 41 is included in the regenerator column at the top thereof as a reflux condenser. Accordingly the rich desiccant stream is past on the tube side through the top section of the regenerator column. Any condensate formed on the outside of the tubes will fall down in side the column as a reflux stream. The gas stream is removed and is treated as in conventional systems or sent directly to a flare.

Further in the embodiment illustrated on figure 2 fuel gas 74 is past through a closed coil arranged in side the bottom section of the column before being released just below the stripping section 44. The coil is surrounded by the lean desiccant and heat is transferred from the lean desiccant to the fuel gas stripping gas. The stripping section is also designed differently in the present embodiment. The liquid collected on the chimney tray is directed by a channel 80 into annulus section defining a desiccant compartment 81 surrounding the structured packing of the stripping section 44. The channel also called down-comer is configured with an outlet below the liquid level in the compartment to secure that the liquid coming down does not interfere with the gas coming up. The annulus is equipped with an overflow distributing the liquid over the structured packing 44 of the stripping section.

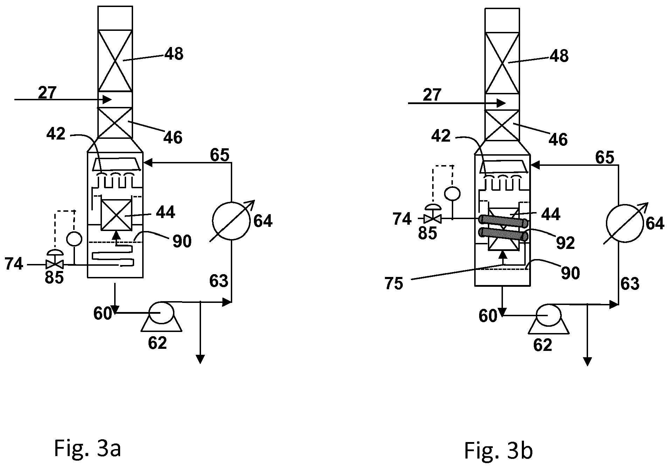

Figures 3a and 3b illustrate alternative embodiments for supplying the fuel gas to the stripping section of the regenerator. Figure 3a illustrates a solution similar to the one illustrated on figure 2 with a heating coil for the gas within the bottom liquid filed section of the column. The fuel gas is released above the bottom liquid level 90. There is as illustrated a liquid level in the desiccant compartment and there might even be a liquid level on the chimney tray 42.

Figure 3b illustrate an attractive embodiment of the fuel gas heating wherein a closed gas coil 92 is arranged within the desiccant compartment surrounding the structured packing of the stripping section 44. The fuel gas is heated as it passes through the coil 92 where after it is released and distributed at a position below the structured packing of the stripping section 44 but above the bottom liquid level 90.

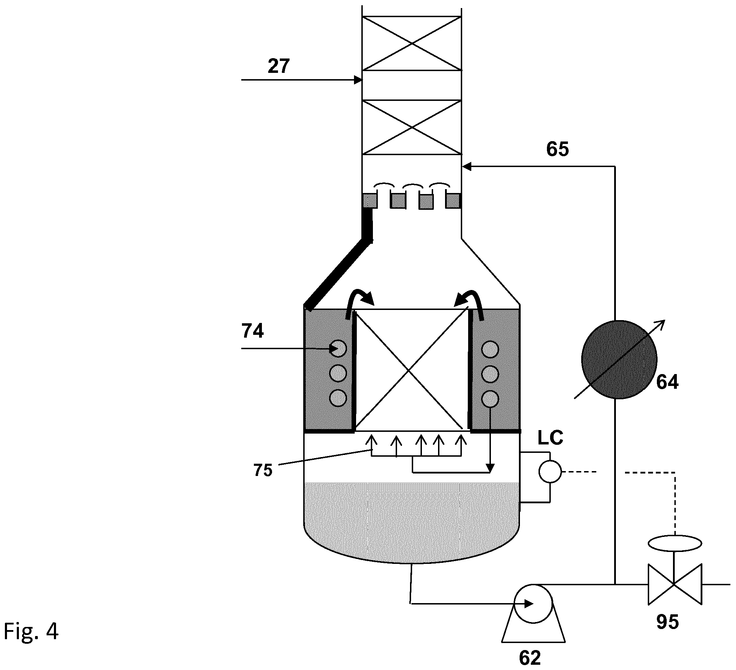

Figure 4 is a schematically cross sectional illustration of a part of the solution illustrated on figure 3b. Visible on figure 4 are three liquid levels, one on the chimney tray, one in the desiccant compartment and the bottom liquid level. A liquid control unit LC is connected to the valve 95 on the stream of purified desiccant leaving the regeneration system and it controls the bottom liquid level. No active control is required on the other liquid levels as they are equipped with overflow arrangements. On the recycle line 65 a valve or controllable orifice (not shown) may be installed controlling pressure within the heater 64.

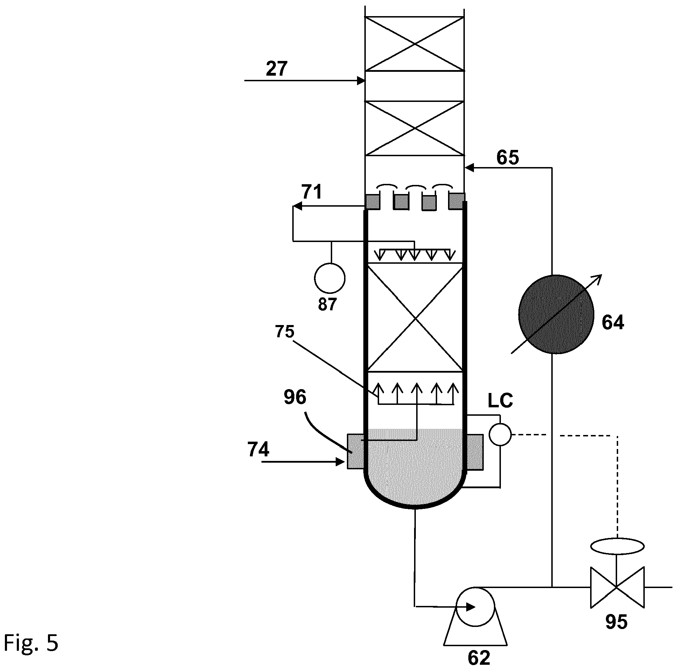

Figure 5 illustrates an alternative embodiment where the fuel gas 74 is fed to a heating jacket 96 arranged on the outside of at the bottom of the regeneration column. From there the fuel gas is released into the column above the bottom liquid level. The liquid 71 collected on the chimney tray is distributed over the top of the stripping section.

In one embodiment a important feature is a strict control of the added heat in recycle heater 64, this is obtained by use of temperature measurement instrument 87 being used in in the liquid phase in proximity where the open heating and subsequent evaporation occurs, i.e. 71 upstream a stripping section.

All the different embodiments illustrated on the figures 3a, 3b, 3b, 4 and 5 may be freely combined with the different embodiments of the other sections of the present invention.

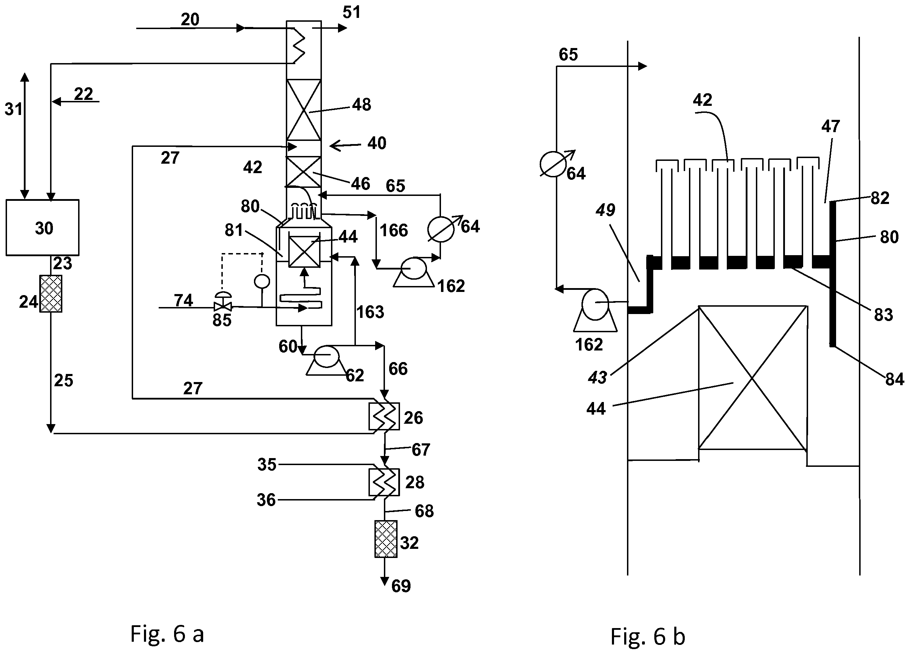

Figure 6a illustrates an alternative configuration of the recycle heating system which is designed to provide additionally increased purity. The recycling and reboiling streams have been split into two separate recycle loops. A part of the bottom liquid is recycled to the desiccant compartment 81 via line 163. This increases the number of times the desiccant passes the stripping section and secures sufficient liquid for the overflow into the stripping section 44. Additionally liquid 166 is withdrawn from the chimney tray 42. In this recycle loop driven by pump 162 heat is added by non-stagnant heater 64 to the liquid and thereby to the regenerator when the liquid is return as stream 65 above the chimney tray 42. This embodiment is expected to provide increased purity bur requires two circulation pumps and level control not only for the bottom liquid level but also for the liquid level on the chimney tray 42. Figure 6b illustrates details of the chimney tray 42, where the height of the chimney is extra long to create a pump buffer volume 47 for pump 162, preferably the height is at least 1/5 time the diameter of the regenerator, but preferably not longer that 1 time, the diameter of the regenerator measured as the inside diameter where the bottom of the chimney 83 is arranged.

The top 82 of a down-comer 80 defines the surface of the pumping volume, and does not extent upwards higher than the top of the chimney 42, and it extends downwards with its end 84 being arranged preferably below the top 43 of the gas stripping section 44, so the liquid flowing over the top 82 does not mix directly with the stripping gas coming up from the gas stripping section 44. The chimney tray bottom 83 may also have a bucket 49 for buffer capacity, alternatively it may utilized an additional external buffer tank (not shown) in between line 166 and pump 162 for extra buffering capacity and or to facilitate separation of entrained gas if need. Separation of entrained gases could here in addition to gravitational principles, also include any other known ways of separating entrained gas, such as cyclones. Pump 162 and or external bucket may in one embodiment be at a significantly lower elevation, preferably 2-3 meter, more preferably more than 3-5 meter, preferably even more than 5 meter below the elevation of the bottom 83 of the chimney tray 42.

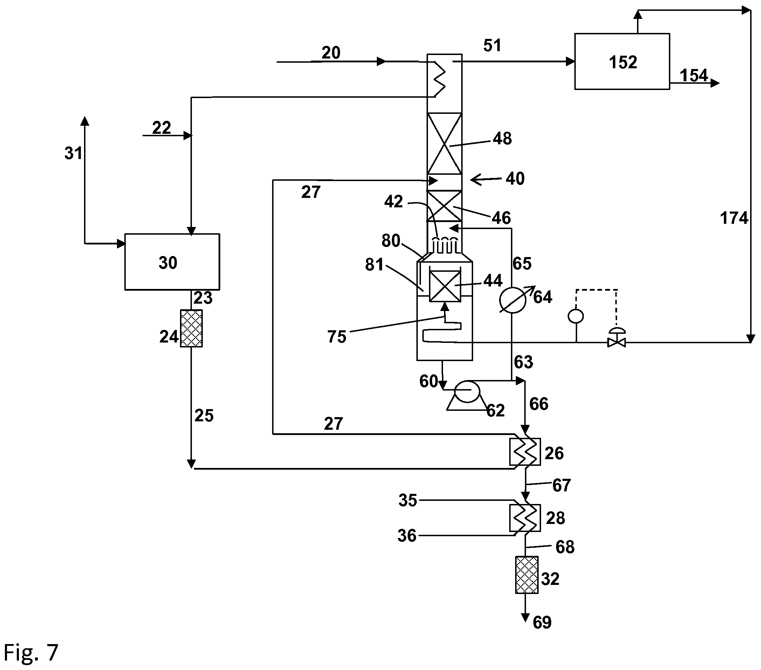

Figure 7 illustrates a further embodiment of the present invention design with the intention to limit the emission and consumption of fuel gas. In this embodiment the top gas stream 51 is past to a treatment unit 152 where the stream is compressed, cooled and separated into a water stream 154 and a recycled fuel gas stream 174 which is reused as fuel gas for the stripping section. If additional fuel gas is required this is added to the line 174 via a top up line (not shown).

The configurations illustrated on figures 6a, 6b and 7 can be combined to a system which provides high purity and limited emission of fuel gas.

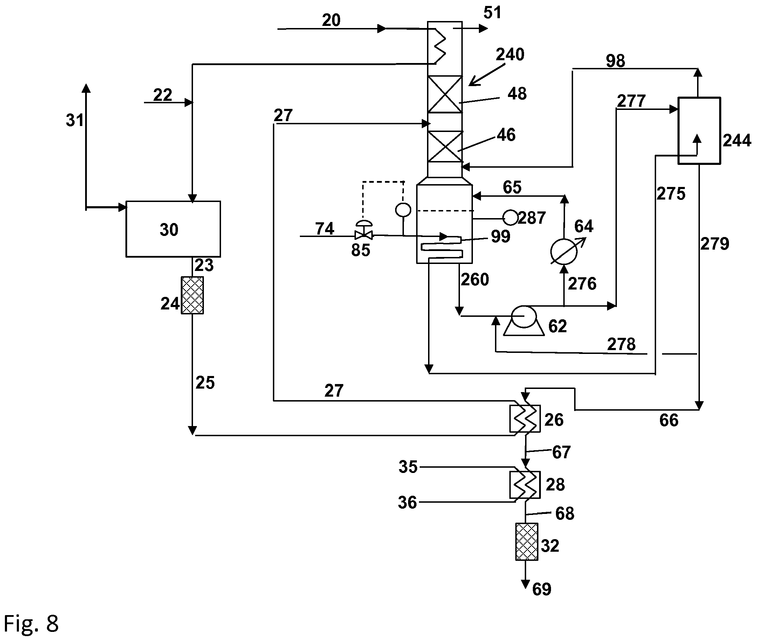

Figure 8 illustrates an embodiment wherein the stripping section is a separate unit 244. Fuel gas 74 is preheated in the coil 99 arranged within the lower section of the remaining regenerator column and from there past into the stripper 244 via line 275. A liquid level is maintained at the bottom of regenerator 240 preferable as shown in figure 5. Now referring again to figure 8 , the liquid collected at the bottom of the remaining regenerator without stripping section 240 consists of semi-lean desiccant and is via line 260 transferred by pump to 62 and split into a recycle stream 276 being heated in heater 64 and returned to the regeneration column and into a fluid stream 277 entering the top of stripper 244.The bottom of the stripper is preferably at an elevation above inlet of the pump 62, or alternatively the stripper 244 is operated at a larger pressure than then regenerator 240, so a portion of bottom liquid 279 from the stripper can be returned upstream the pump 62 as stream 278 without any additional pump. The operating pressure of the stripper 244 is controlled to a set pressure, preferably comprising pressure reduction of the fluid 277 entering the top of the stripper 244 by a valve or orifice (not show) in the process line 277, and a valve or orifice (not shown) in process line 98.

In the illustrated embodiment a part of the bottom liquid 279 from the stripper is the purified desiccant 66 to be recycled to the contactor. The gas stream 98 leaving the top of the stripper is preferably returned to the regeneration column at a level above the inlet of heated/reboiled fluid to avoid mixing the gas with the liquid, but preferably below middle structured packing 46. This together with the feature the split of the process line 62 into process line 276 and 277 in this embodiment enables separate flow rates, enabling an even further fine tuning of the process to achieve the synergetic effect to reach an extra high purity of the desiccant.

In a further aspect it is further possible to pass a portion of the bottom liquid 279 from the stripper back into the heater loop by fluid communication 278 to process line 260. Optionally the bottom liquid 279 can go in a direct loop to the stripper unit 244 so that the liquid passes the stripper several times (not shown), i.e. process line 278 is directly connected to process line 277 (not shown), this would however require also an additional circulation pump (not shown), and at stead state after numerous iterations one will achieve approximately same purity by passing a portion of the bottom liquid 279 from the stripper back into the loop by fluid communication 278 to process line 260, and in addition the column will be smaller as then a higher purity of desiccation fluid is being returned via line 65 and used as open heating medium in the column 240.

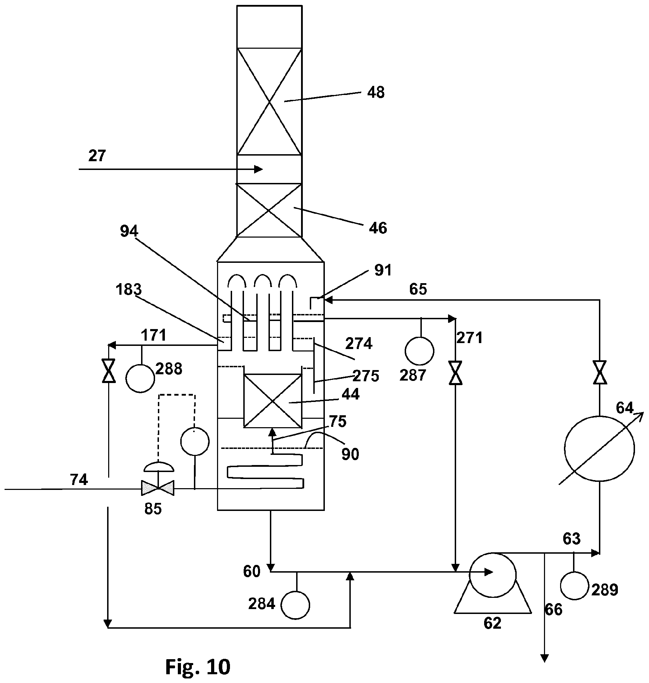

Figure 10 illustrates an embodiment of the present invention wherein an impinging plate 91 is arranged within the column just inside where the outlet of the recycled conduit 65 in the column is arranged. The impinging plate 91 provides a separation zone where the gasses flashing of due to the depressurisation are separated from the liquid. The liquid continues around the edges of the plate and mixes with the liquid phase coming down trough the column. Liquid is collected on the tray 94 and directed to the tray 183 below. Preferably the tray 94 has a limited number of openings, preferably only one opening through which all the liquid passes. The tray 94 may have an opening with an overflow height level to buffer some liquid for improved mixing of the liquid phases.

On figure 10 the tray 94 secures thorough mixing of the liquid streams thereby providing a liquid phase on tray 183 with a homogeneous temperature. Also illustrated on figure 10 are two optional alternative slip streams 171 and 271 passing liquid from the trays 94 or 183 respectively and into the lean desiccant stream 60. These optional streams make it possible to increase the flow through the heater 64 thereby increasing the heat input. This provides flexibility in the system for adjusting the process to changes in the amount of water included in the rich desiccant. In one embodiment in order control the heat transfer process, temperature transmitters are utilized at various places in the process, for the liquid temperature above the tray 94 by for example an temperature transmitter 287 on flow line 271, and or at other places in the process for example a temperature transmitter 288 on flow line 171, and or temperature transmitter 284 on flow line 60, and or temperature transmitter 289 on flow line 63. In another embodiment at the same lines where temperature transmitters are suggested also flow meter transmitters are utilized. The measured temperatures and/or flows are send to a regulator processing unit, that sends signals to the recycle heater on how much heat that shall be provided. In one embodiment the regulating processing unit is a proportional-integral controller (PI controller) or another it is a proportional-integral-derivative controller (PID controller).

In one embodiment an important feature is a strict control of the added heat in recycle heater by use of temperature measurement instrument 287 being used in the liquid phase in proximity where the open heating and subsequent evaporation occurs, i.e. upstream a stripping section step.

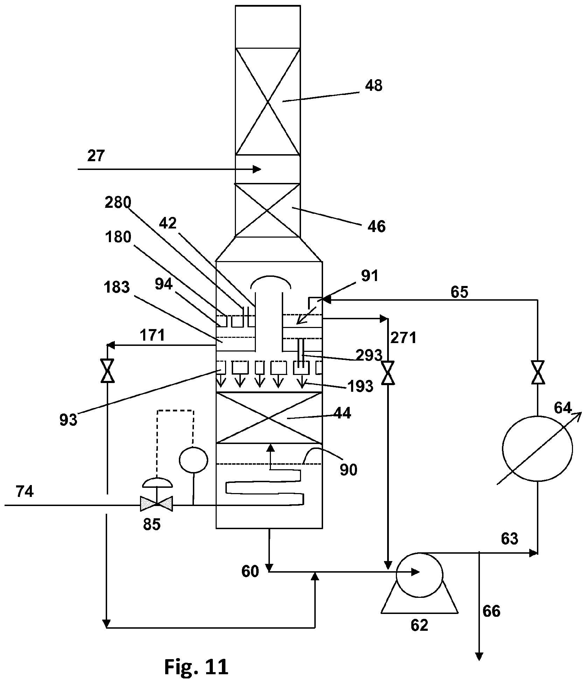

Figure 11 illustrates a similar embodiment as illustrated on figure 10 but including a liquid distribution tray 93 distributing the liquid entering the stripping section 44 via openings 193 in the tray 93. The tray may comprise channels covering a substantial part of the tray to secure even distribution of the liquid flowing into the stripping section. Liquid from the second tray 183 is directed downwards to the distribution plate 93 via a channel 293 with limited access to the gas phase. The openings 193 in the distribution tray allowing the gas to pas through the tray may in one embodiment be equipped with chimney hats. A further difference is that the chimney tray 42 only comprises one central chimney.

Figure 11 item 280 illustrates one example of overflow height level by an protruding nozzle 280 through the tray 94, whereas figure 10 illustrate one embodiment where the no overflow height level is utilized indicated with dotted lines 180. The overflow height (H) is preferably a size of at least 0.05 or 0,1 times that of a representative diameter (Drep) of a representational cross sectional area (Arep), where Arep is the sum of all the openings through which all the liquid passes. Arep is sized small enough to ensure adequate mixing above the tray 94, but at the same time not allow the liquid to build up above the top edge of the chimney tray 42. In one embodiment Arep is larger than 0.01 and less than 0.2 times the cross sectional area of the column in the open heating section, in another embodiment Arep is larger than 0.015 and less than 0.15. In order to handle various recycle flow rates some or more openings 180, 280 can be staggered at different overflows heights in scenarios where the flow rates are fluctuating. If opening 180 is flooded with liquid possibly including entrapped gas, then gas collected between the trays 94 and 183 can escape upwards through the higher opening 280.

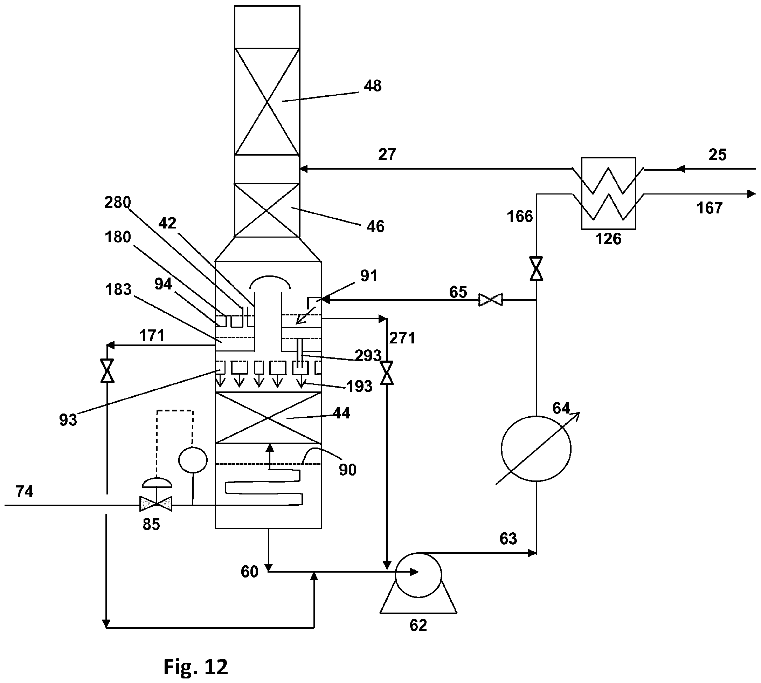

Figure 12 illustrates a similar embodiment as illustrated on figure 11 but including heating of the rich desiccant 25 by heat transfer in a heat exchanger 126, where the heating medium is a lean desiccant stream 166 taken from the recycled loop upstream the recycle heater 64.

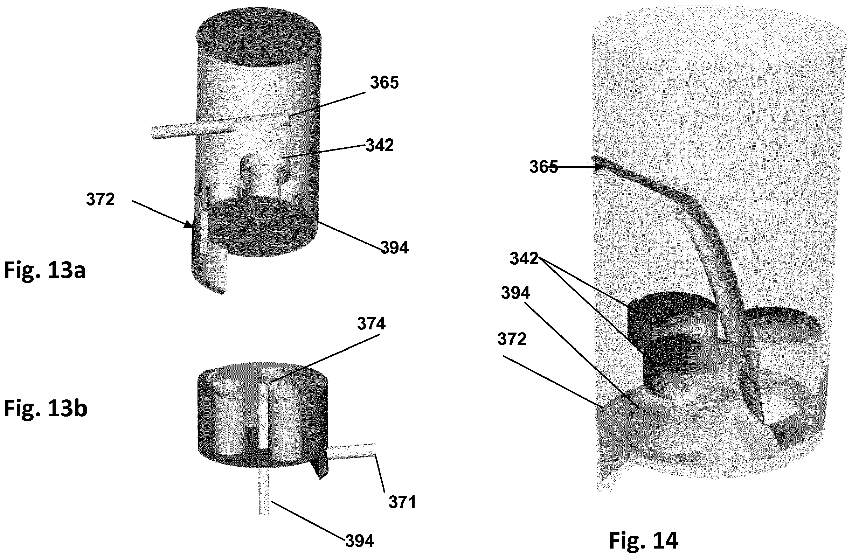

Figures 13a and 13b illustrates one example of adequate mixing and/or also adequate vapour separation. 13a is an illustration of an embodiment of the upper part of the open heating section illustrated in figure 10, and figure 13b is an illustration of an embodiment of the lower part of the heating section in figure 10. Except that no impinging plate is included. The item numbers corresponds except for the first number is replaced or introduced with the number 3, for instance item 94 in figure 10 is 394 in figure 13a and figure 13b. The outlet number 371 is equivalent to outlet stream 171 on figure 10. Item 372 illustrate the opening section where liquids flow down from plate 394. Considering the small cross section area desired to be used for open heating enabling reduced column diameter, there are challenges to achieve adequate mixing and/or also adequate vapour separation. If these challenges are not resolved vapour may get entrapped into the flow into the gas stripping, and will diminishing the effect of the gas stripping section and subsequently the purity of the desiccant after the stripping. Carefully considerations of flow rates, flow patterns, cross sectional area, inlet flow of heat recycle fluid, and liquid heights and downcomer position, cross sectional area, and liquid heights area all factors that can influence the performance of the system. Figure 14 is a Computational Fluid Dynamics analysis of the design illustrated in figure 13a and 13b, where the inputted flow rates, conditions and geometry are analysed to find the temperature distribution. And as one can see from figure 14 the temperature is thoroughly mixed prior the downward opening area 372, indicating a proper mixing and evaporation for the purpose. In the preferred embodiment of what is disclosed in figure 13a, 13b and 14, the rich desiccant feed entry position 365 is at the same side as the downward hole 372 with a flow direction mainly radially inwards and mainly horizontally.

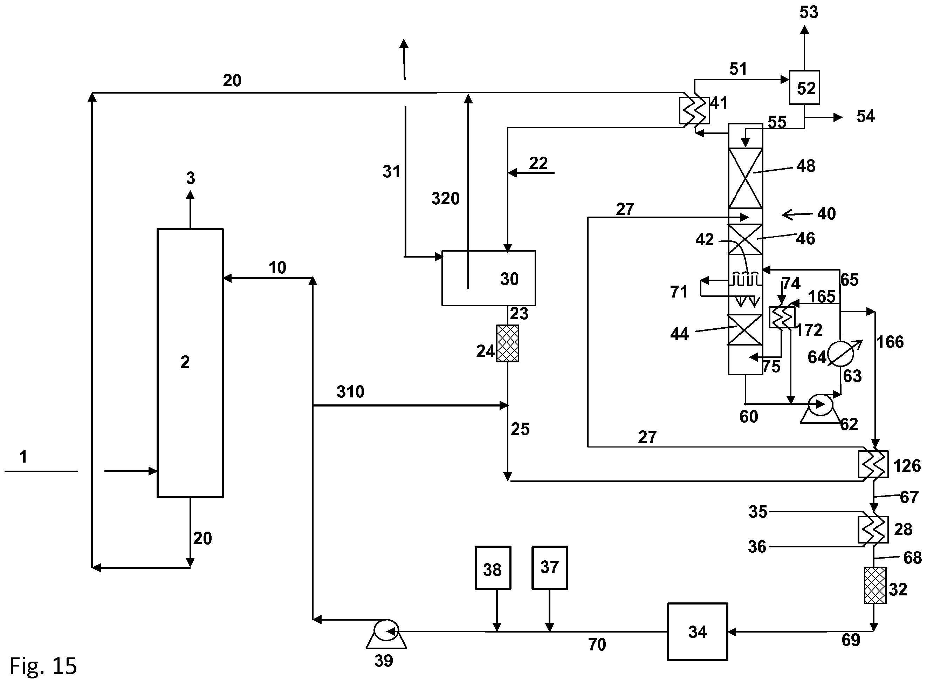

Figure 15 illustrates an embodiment where the column would be even smaller as the rich desiccant 25 is preheated to an even higher temperature by a cross heat exchanger 126 where the heating medium 166 is taken from a portion of heated fluid from recycle heater 64. Alternatively, a separate additional heater with external heat could be utilized on the rich desiccant (not shown). In the illustrated case a larger portion of the water will be evaporated when entering the column 40 and the desiccant entering at higher temperature, so the necessary heat added at the open heating section below section 46 and associated evaporation space will be accordingly less.

Figure 15 illustrates yet another embodiment, where a portion 165 of heated fluid from recycle heater 64 is used to cross heat up the stripping gas 74 in heat exchanger 172 to a higher temperature than the other cross heat exchanger embodiments disclosed in for example figure 1 and 2 achieve.

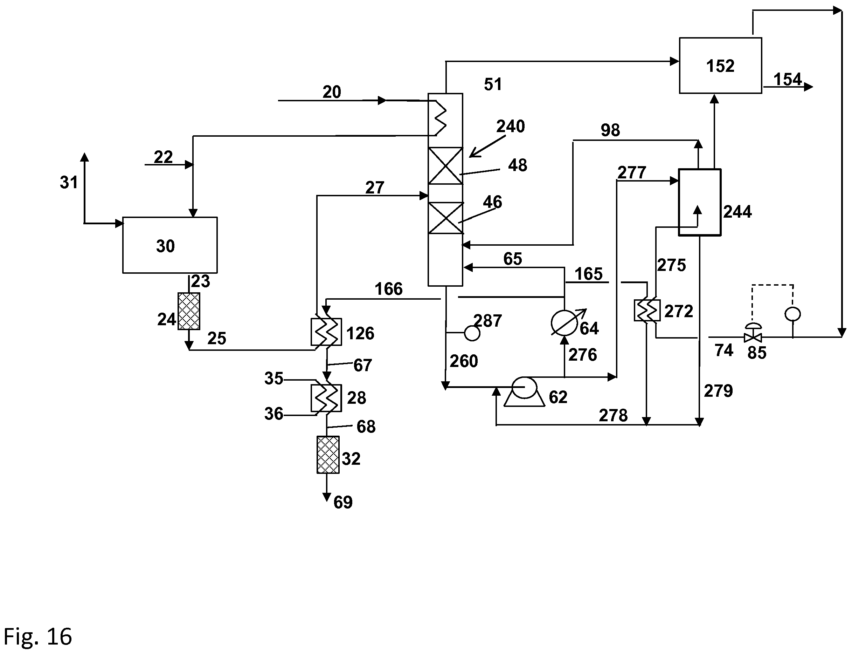

Figure 16 illustrates an embodiment where the stripping section is arranged externally as in figure 8, and rich desiccant 25 is preheated to an even higher temperature by in a cross heat exchanger 126 where the heating medium 166 is taken from a portion of heated fluid from recycle heater 64, and where the stripping gas in the form of recycled stripping gas also is preheated to an even higher temperature in a cross heat exchanger 272 where the heating medium 165 is taken from a portion of heated fluid from recycle heater 64.

Combinations of the various embodiments and options disclosed in the figures disclosed in this application shall be considered as an embodiment of the invention.

### Examples of mass balance and conditions

In a system according to figure 2 when used for TEG purification examples of condition during normal operation are exemplified here. The rich TEG solution 20 is loaded with water and dissolved hydrocarbons. It flows through a Level Control Valve to the TEG reflux condenser 41 where rich TEG is heated to 60-80 preferably approximately 70°C in the tube side. The vapours from the purifier are partially condensed in the shell side. Then the rich TEG is sent to the TEG Flash Drum 30. The TEG Flash Drum 30 operates at a pressure of 3-6 preferably approximately 5 barg, maintained by a pressure control valve on the overhead vent line 31 releasing flash gas to LP Flare. A cap gas control valve using network fuel gas is also provided for start-up only. The control of the TEG level in the Flash Drum is managed by a Level Control Valve located downstream the Hot Lean/Rich TEG Heat Exchanger 26.

TEG Flash Drum 30 is preferably equipped with weir and defoaming baffle to separate TEG from hydrocarbons. The hydrocarbon condensates separated from the TEG are accumulated in the hydrocarbons compartment of the Flash Drum 30. Hydrocarbons are then routed to the Closed Drain Header via ON/OFF level control.

At the outlet of the TEG Flash Drum 30, the Rich TEG solution flows through TEG Cartridge Filter 24 (one filter in operation + one in standby -100% of the rich TEG flowrate is treated) where 99% of solid particles larger than 10 microns are captured.

After leaving the filtering vessels, the rich TEG solution 25 is heated to 160-180°C in the Hot Lean/Rich TEG Heat Exchanger 26. Some flashing takes place across the Level control valve (on 27 not shown) before entering the TEG Purifier 40 where the vapour portion flows upward through the Top structured packing 48 and the liquid portion flows on Chimney tray 42 where it is mixed with lean TEG 65 at 190-204°C coming from a vertical TEG Reboiler 64. The mixing between Rich & Lean permits to improve TEG concentration above 99.1 weight-% and also to obtain a correct temperature of approximately 190°C before stripping. The mixed TEG goes down from chimney tray 42 to TEG compartment 81 and flows by overflow from TEG compartment to stripping zone 44, where TEG is stripped over structured packing by injecting hot fuel gas at the bottom of the packing. The Stripping zone is designed to achieve a required TEG purity.

At outlet of TEG Purifier 60, TEG Recycle pump 62 is used to give a force drive to recycle lean TEG 63 and to pressurize TEG while heated in heater 64. The main flow is recycled to TEG Purifier via TEG Reboiler 64 where lean TEG is heated to 190-204°C and then depressurized with an orifice or valve 76 and then re-injected at level above a chimney tray 42 in order to be mixed with rich TEG. The force drive and pressurization permits to have a better thermal exchange through TEG Reboiler 64 and avoid hot spots and thus degrade the glycol. Unlike conventional Reboiler, where glycol is predominantly stagnant and therefore more risk to degrade the glycol.

TEG Recycle Pump 62 permits also to send Pure TEG 66 to TEG Surge drum via Level Control Valve controlling level at bottom of TEG Purifier, via Hot Lean/Rich TEG Heat Exchanger 26 where it is cooled from approximately 196°C to 100°C by the incoming Rich TEG solution 25 and via the Lean TEG Cooler 28 where it is cooled from 100°C to 48°C (differential temperature is 8°C over the gas temperature at contactor inlet) by using cooling water. The Lean TEG temperature regulation is achieved by adjusting the cooling water flow rate. Before entering the Surge drum, lean TEG are routed to TEG Carbon Filter 69 (100% of TEG flow rate is treated) where degraded glycol are absorbed, it is very beneficial for process because it improves TEG purity.

The reflux condensation is achieved by an integrated Reflux Condenser 41 with rich TEG from TEG Contactor as explained earlier. This equipment is sized to achieve a reflux ratio of approximately 30 %. TEG Purifier vapours (removed water, Hydrocarbon, BTX) are routed to the LP Flare.

Before entering the Stripping Column, fuel gas is heated to approximately 150°C by flowing through a heating coil in the TEG Purifier. Fuel gas flow to the Stripping zone 44 is measured by a flowmeter, and is controlled by valve 85 located upstream of the TEG Purifier, preferably the valve 85 is controlled by manual adjustment of a globe valve type.

In a regeneration system according to the present invention according to figure 2 at normal operating conditions the heated rich desiccant stream comprises between 2.5 and 5 w/w % water, more preferably between 3 and 4 w/w% water. The preheating of the stream has preferably resulted in a temperature within the interval 160-175°C. The purified bottom liquid 60 comprises 0.05-0.15 w/w% water, preferably less than 0.1 w/w% water. The amount (massflow) of fluid 63 being recycled and heated is compared to the amount (massflow) of purified fluid 66 being returned to the dehydration contactor between 1:1 to 3:1 preferably between 1.5:1 and 2.5:1. Accordingly preferably twice as much fluid is reheated and recycled to the regeneration column as purified desiccant being produced. It is believed that the recycling over the stripping section provides a significant contribution to the obtained increased purity. The temperature of the heated fluid 65 is within the range 180-205°C. The massflow of the fuel gas is compared to the massflow of rich desiccant between 5-10 w/w%.

In a regeneration system according to the present invention according to figure 8 at normal operating conditions the amount (massflow) of fluid 276 being recycled and heated is compared to the amount (massflow) of purified fluid 66 being returned to the dehydration contactor between 1:1 to 3:1 preferably between 1.5:1 and 2.5:1, and the amount (massflow) of fluid 277 being stripped compared to the amount (massflow) of purified fluid 66 being returned to the dehydration contactor between 1:1 to 3:1 preferably between 1.5:1 and 2.5:1.

## Claims

1. Desiccant regeneration system comprising
- a vertical purification column (40) comprising
- a distillation section (48),
- a rich desiccant inlet (27) below the distillation section, a stripping gas and vapour outlet (51) above the distillation section and a liquid outlet (60) at the bottom part of the purification column,
- a first heat exchanger (26, 126) for heating a rich desiccant stream upstream the a rich desiccant inlet (27),
**characterised in that** the system further comprises
- a recycle pump (62) capable of providing pressurized fluid comprising an inlet in fluid communication with a first liquid level in said column below the rich desiccant inlet (27) and comprising an outlet,
- a recycle heater (64) with an inlet in fluid communication with the outlet of the recycle pump (62), and a recycle heater outlet in fluid communication with said purification column (40) via a recycle conduit (65), and
- a valve or orifice (76) on said recycle conduit (65) such that fluid recycled through the recycle heater is depressurized before entering said purification column,
wherein the system comprises
- a fuel gas stripping section (44) comprising a stripping gas inlet (75), a stripping liquid inlet, a stripping liquid outlet and a stripping gas outlet, wherein the stripping liquid inlet is in fluid communication with the recycle heater outlet, the stripping liquid outlet is in fluid communication with the inlet of the recycle pump (62), and the stripping gas outlet is in fluid communication with the purification column below the distillation section.

2. Desiccant regeneration system according to any one of the previous claims, wherein the recycle heater (64) is a non-stagnant heater, preferably an electrical heater.

3. Desiccant regeneration system according to any one of the previous claims, wherein the recycle heater (64) uses signals from one or more temperature measuring instruments (87, 287, 288) in the liquid phase (71, 171, 271) upstream the stripping section (44, 244) and or one or more temperature measuring instruments (284, 289) in the liquid phase (60, 63) upstream the recycle heater (64).

4. Desiccant regeneration system according to any one of the previous claims, wherein the system comprises fuel gas heating means (72) for heating fuel gas upstream the fuel gas stripping section, wherein the fuel gas heating means (72) is arranged for heat communication with recycled heated liquid (71) returned to the purification column.

5. Desiccant regeneration system according to claim 4, wherein the fuel gas heating means (92, 96, 99) are arranged for heat communication with liquid within the bottom part of the purification column (40).

6. Desiccant regeneration system according to any one of the claims 1-3, wherein the system comprises fuel gas heating means (172, 272) for heating fuel gas upstream the fuel gas stripping section (44), wherein the fuel gas heating means (172, 272) is arranged for heat communication with an off take (165) of liquid heated by the recycle heater (64).

7. Desiccant regeneration system according to any one of the previous claims, wherein the system comprises means for maintaining a bottom liquid level (90) at the bottom part of the purification column; and wherein the stripping section (44) is arranged in the lower part of the purification column (40) below the recycle heater outlet (65) and above the bottom liquid level (90).

8. Desiccant regeneration system according any one of the claims 1 to 7, wherein the first heat exchanger (126) for the rich desiccant (25) is arranged for heat communication with an off take (166) of the liquid heated by the recycle heater (64).

9. Desiccant regeneration system according to any one of the previous claims, wherein the column (40) comprises at least one chimney tray (42) arranged above the stripping section (44) and below the recycle heater outlet (65), such that stripping gas is passing through the chimney tray (42), and wherein the at least one chimney tray comprising a conduit (80) for liquid passing down to a level below the chimney tray (42).

10. Desiccant regeneration system according to claim 9, wherein the summarized area (Arep) of all the opening through which all the liquid passes down is larger than 0.01 and less than 0.2 times the cross sectional area of the column in the section comprising the outlet from the recycle heater.

11. Desiccant regeneration system according to claim 9 or 10, wherein a bottom (83) of the chimney tray (42) is the bottom of a second liquid level and where the conduit (80) for liquid passing down is protruding substantially above the bottom (83) of the chimney tray, where the top (82) of the conduit (80) will be a top level of the second liquid level.

12. Desiccant regeneration system according to any one of the claims 9-11, wherein the column further comprises a desiccant compartment (81) below the chimney tray comprising an overflow into the stripping section (44), where the overflow preferably comprises a distribution system evenly distributing the overflow across the area of the stripping section.

13. Desiccant regeneration system according to the claim 12, wherein the fuel gas heating means are arranged in the desiccant compartment (81).

14. Desiccant regeneration system according to any one of the claims 1-13, wherein the system comprises a top gas compression, cooling and separation system (152) with an top gas inlet in fluid communication with the top gas outlet and a separated fuel gas outlet (174) in fluid communication with the fuel gas inlet (75) of the stripping section such that the fuel gas can be recycled.

15. Desiccant regeneration system according to any one of the previous claims, wherein the regeneration system comprises a filter (32) in fluid communication with and arranged downstream of the liquid outlet (60) at the bottom part of the purification column.

16. Desiccant regeneration system according to any one of the previous claims, wherein the system comprises a surge drum (34) in fluid communication with at the bottom part of the purification column and where the surge drum volume size is smaller than the volume of the purification column below the recycle heater outlet, preferably the surge drum volume size is in the range 1/4-1/8 times the purification column volume size.

17. Desiccant regeneration system according to any one of the claims 1-3, wherein the stripping section is arranged in an externally vessel (244) where the desiccant inlet (277) of the vessel (244) is in fluid communication with the outlet of the recycle pump (62) and that a desiccant outlet (279) of the vessel (244) is in fluid communication with the inlet of the recycle pump (62).

18. Desiccant regeneration system according to any one of the claims 1-17, wherein the recycle pump (62) is capable of providing pressurized fluid with a pressure above 1.5 bara, preferably above 2 bara.

19. Method for regeneration of desiccant thereby obtaining a purified desiccant stream from a rich desiccant stream, comprising
- heating the rich desiccant stream with heat exchange with a top gas stream,
- flashing the heated rich desiccant stream by feeding the heated desiccant stream to a vertical purification column via a rich desiccant inlet, resulting in a the top gas stream and the bottom liquid stream, wherein
the method is **characterised by**
- pressurizing a portion of the bottom liquid in a recycle pump, obtaining a pressurised stream;
- heating the pressurised stream in a non stagnant recycle heater, obtaining a heated pressurised stream;
- depressurising the heated pressurised stream, obtaining a depressurised heated stream;
- feeding the obtained depressurised heated stream as a recycle stream back into the purification column at a level between the rich desiccant inlet and a bottom liquid level, such that the depressurised heated stream is mixed with the rich desiccant stream such that heat is transferred from the depressurised heated stream to the rich desiccant stream; and obtaining a portion from the bottom liquid as the purified desiccant stream;
- wherein the method comprises stripping a liquid obtained by the flashing of the rich desiccant stream with a heated fuel gas and flashing the recycle stream, and also stripping a liquid obtained from the flashed recycle stream with the heated fuel gas.

20. Method according to claim 19, wherein the mass flow of the recycle stream compared to the obtained purified desiccant stream is between 1:1 and 5:1, preferably between 1.5:1 and 3:1.

21. Method according to claim 19 or 20, wherein the portion of the bottom liquid is pressurised to above 1.5 bara, preferably above 2 bara.

22. Method according to claim 19, 20, or 21 , wherein the temperature of the heated recycle stream is between 20-50°C preferably 25-40°C higher than the temperature of the rich desiccant stream being fed to the column.

23. Method according to claim 19, wherein the method comprises heating the fuel gas by heat transfer from a liquid stream from the purification column, preferably the bottom liquid or the liquid from the flashed recycle stream.

24. Method according to any one of the claims 19-23, wherein the purity of the bottom liquid is above 99.3 w/w %.

25. Method according to claim 19, wherein the mass flow of fluid being stripped compared to the mass flow of obtained purified desiccant stream is between 1:1 to 3:1 preferably between 1.5:1 and 2.5:1.

26. Method according to any one of the claims 19, 23-25, wherein the method comprises controlling the temperature of the liquid at the liquid inlet to the stripping section by controlling the recycle pump and the recycle heater.

27. Method according to claim 26, wherein the temperature of the liquid fluctuates less than +/- 1°C.

28. Method according to any one of the claims 19, 23 to 27, wherein the stripping is performed in an externally vessel (244) where the method comprises passing a part of the recycled stream in through a desiccant inlet of the vessel (244) and passing liquid from the stripping vessel back into the bottom liquid stream.

29. Method according to claim 19-28, wherein the method comprises heating the rich desiccant stream (25) with an off take (166) of the liquid heated by the recycle heater (64).

## Patentansprüche

1. Trockenmittel-Regenerationssystem, umfassend
- eine vertikale Reinigungskolonne (40), umfassend
- einen Destillationsabschnitt (48),
- einen Einlass (27) für beladenes Trockenmittel unterhalb des Destillationsabschnitts, einen Strippgas- und Dampfauslass (51) oberhalb des Destillationsabschnitts und einen Flüssigkeitsauslass (60) am unteren Teil der Reinigungskolonne,
- einen ersten Wärmetauscher (26, 126) zum Erwärmen eines Stroms von beladenem Trockenmittel stromaufwärts des Einlasses (27) für beladenes Trockenmittel,
**dadurch gekennzeichnet, dass** das System ferner umfasst:
- eine Umwälzpumpe (62), die in der Lage ist, ein unter Druck stehendes Fluid bereitzustellen, und einen Einlass in Fluidverbindung mit einem ersten Flüssigkeitspegel in der Kolonne unterhalb des Einlasses (27) für beladenes Trockenmittel umfasst und einen Auslass umfasst,
- einen Umlauferhitzer (64) mit einem Einlass, der mit dem Auslass der Umwälzpumpe (62) in Fluidverbindung steht, und mit einem Umlauferhitzerauslass, der über eine Rückführleitung (65) mit der Reinigungskolonne (40) in Fluidverbindung steht, und
- ein Ventil oder eine Öffnung (76) auf der Rückführleitung (65), so dass Fluid, das durch den Umlauferhitzer rückgeführt wird, vor Eintritt in die Reinigungskolonne druckentlastet wird,
wobei das System Folgendes umfasst:
- einen Treibgas-Strippabschnitt (44), der einen Strippgaseinlass (75), einen Strippflüssigkeitseinlass, einen Strippflüssigkeitsauslass und einen Strippgasauslass umfasst, wobei der Strippflüssigkeitseinlass mit dem Auslass des Umlauferhitzers in Fluidverbindung steht, der Strippflüssigkeitsauslass mit dem Einlass der Umwälzpumpe (62) in Fluidverbindung steht und der Strippgasauslass mit der Reinigungskolonne unterhalb des Destillationsabschnitts in Fluidverbindung steht.

2. Trockenmittel-Regenerationssystem nach einem der vorhergehenden Ansprüche, wobei der Umlauferhitzer (64) eine nicht-stagnierende Heizvorrichtung, vorzugsweise eine elektrische Heizvorrichtung ist.

3. Trockenmittel-Regenerationssystem nach einem der vorhergehenden Ansprüche, wobei der Umlauferhitzer (64) Signale von einem oder mehreren Temperaturmessgeräten (87, 287, 288) in der flüssigen Phase (71, 171, 271) stromaufwärts des Strippabschnitts (44, 244) und einem oder mehreren Temperaturmessgeräten (284, 289) in der flüssigen Phase (60, 63) stromaufwärts des Umlauferhitzers (64) verwendet.

4. Trockenmittel-Regenerationssystem nach einem der vorhergehenden Ansprüche, wobei das System Treibgasheizmittel (72) zum Erwärmen von Treibgas stromaufwärts des Treibgas-Strippabschnitts umfasst, wobei die Treibgasheizmittel (72) für den Wärmeaustausch mit rezirkulierter erwärmter Flüssigkeit (71), die zur Reinigungskolonne rückgeführt wurde, angeordnet sind.

5. Trockenmittel-Regenerationssystem nach Anspruch 4, wobei die Treibgasheizmittel (92, 96, 99) für den Wärmeaustausch mit Flüssigkeit im unteren Teil der Reinigungskolonne (40) angeordnet sind.

6. Trockenmittel-Regenerationssystem nach einem der Ansprüche 1 bis 3, wobei das System Treibgasheizmittel (172, 272) zum Erwärmen von Treibgas stromaufwärts des Treibgas-Strippabschnitts (44) umfasst, wobei die Treibgasheizmittel (172, 272) für den Wärmeaustausch mit einer Entnahme bzw. einem entnommenem Teil (165) von Flüssigkeit, die von dem Umlauferhitzer (64) erwärmt wurde, angeordnet sind.

7. Trockenmittel-Regenerationssystem nach einem der vorhergehenden Ansprüche, wobei das System Mittel zur Aufrechterhaltung eines Sumpfflüssigkeitspegels (90) im unteren Teil der Reinigungskolonne umfasst; und wobei der Strippabschnitt (44) in dem unteren Teil der Reinigungskolonne (40) unterhalb des Umlauferhitzerauslasses (65) und oberhalb des Sumpfflüssigkeitspegels (90) angeordnet ist.

8. Trockenmittel-Regenerationssystem nach einem der Ansprüche 1 bis 7, wobei der erste Wärmetauscher (126) für das beladene Trockenmittel (25) für den Wärmeaustausch mit einer Entnahme (166) der von dem Umlauferhitzer (64) erwärmten Flüssigkeit angeordnet ist.

9. Trockenmittel-Regenerationssystem nach einem der vorhergehenden Ansprüche, wobei die Kolonne (40) wenigstens einen Kaminboden (42) umfasst, der oberhalb des Strippabschnitts (44) und unterhalb des Umlauferhitzerauslasses (65) angeordnet ist, so dass Strippgas durch den Kaminboden (42) strömt, und wobei der wenigstens eine Kaminboden eine Leitung (80) für Flüssigkeit, die nach unten zu einer Ebene unterhalb des Kaminbodens (42) strömt, umfasst.

10. Trockenmittel-Regenerationssystem nach Anspruch 9, wobei die summierte Fläche (Arep) der gesamten Öffnung, durch welche sämtliche Flüssigkeit nach unten strömt, größer als das 0,01- und kleiner als das 0,2-fache der Querschnittsfläche der Kolonne in dem den Auslass vom Umlauferhitzer umfassenden Abschnitt ist.

11. Trockenmittel-Regenerationssystem nach Anspruch 9 oder 10, wobei ein unterster Teil (83) des Kaminbodens (42) der Tiefststand eines zweiten Flüssigkeitspegels ist und wobei die Leitung (80) für nach unten strömende Flüssigkeit beträchtlich über den untersten Teil (83) des Kaminbodens hinausragt, wobei der oberste Teil (82) der Leitung (80) ein höchster Pegel des zweiten Flüssigkeitspegels sein wird.

12. Trockenmittel-Regenerationssystem nach einem der Ansprüche 9 bis 11, wobei die Kolonne ferner ein Trockenmittelabteil (81) unterhalb des Kaminbodens umfasst, das einen Überlauf in den Strippabschnitt (44) umfasst, wobei der Überlauf vorzugsweise ein Verteilersystem umfasst, das den Überlauf gleichmäßig über die Fläche des Strippabschnitts verteilt.

13. Trockenmittel-Regenerationssystem nach Anspruch 12, wobei die Treibgasheizmittel in dem Trockenmittelkompartiment (81) angeordnet sind.

14. Trockenmittel-Regenerationssystem nach einem der Ansprüche 1 bis 13, wobei das System ein Kopfgaskompressions-, -kühl- und -trennsystem (152) umfasst, mit einem Kopfgaseinlass in Fluidverbindung mit dem Kopfgasauslass und einem Auslass (174) für abgetrenntes Treibgas in Fluidverbindung mit dem Treibgaseinlass (75) des Strippabschnitts, so dass das Treibgas dem Kreislauf wieder zugeführt werden kann.

15. Trockenmittel-Regenerationssystem nach einem der vorhergehenden Ansprüche, wobei das Regenerationssystem einen Filter (32) umfasst, der in Fluidverbindung mit dem Flüssigkeitsauslass (60) am unteren Teil der Reinigungskolonne steht und stromabwärts von diesem angeordnet ist.

16. Trockenmittel-Regenerationssystem nach einem der vorhergehenden Ansprüche, wobei das System einen Pufferbehälter (34) in Fluidverbindung mit dem unteren Teil der Reinigungskolonne umfasst und wobei die Volumengröße des Pufferbehälters kleiner ist als das Volumen der Reinigungskolonne unterhalb des Umlauferhitzerauslasses, wobei die Volumengröße des Pufferbehälters vorzugsweise 1/4 bis 1/8 der Volumengröße der Reinigungskolonne entspricht.

17. Trockenmittel-Regenerationssystem nach einem der Ansprüche 1 bis 3, wobei der Strippabschnitt in einem externen Behälter (244) angeordnet ist, wobei der Trockenmitteleinlass (277) des Behälters (244) in Fluidverbindung mit dem Auslass der Umwälzpumpe (62) steht und ein Trockenmittelauslass (279) des Behälters (244) in Fluidverbindung mit dem Einlass der Umwälzpumpe (62) steht.

18. Trockenmittel-Regenerationssystem nach einem der Ansprüche 1 bis 17, wobei die Umwälzpumpe (62) in der Lage ist, ein unter Druck stehendes Fluid mit einem Druck über 1,5 bara, vorzugsweise über 2 bara bereitzustellen.

19. Verfahren zur Regeneration von Trockenmittel, wodurch ein Strom von gereinigtem Trockenmittel aus einem Strom von beladenem Trockenmittel erhalten wird, umfassend
- Erwärmen des Stroms von beladenem Trockenmittel durch Wärmeaustausch mit einem Kopfgasstrom,
- Flashen des erwärmten Stroms von beladenem Trockenmittel durch Zuspeisen des erwärmten Trockenmittelstroms zu einer vertikalen Reinigungskolonne über einen Einlass für beladenes Trockenmittel, was den Kopfgasstrom und den Sumpfflüssigkeitsstrom zum Ergebnis hat, wobei
das Verfahren **gekennzeichnet ist durch**
- Unterdrucksetzen eines Teils der Sumpfflüssigkeit in einer Umwälzpumpe, wodurch ein unter Druck stehender Strom erhalten wird;
- Erwärmen des unter Druck stehenden Stroms in einem nicht-stagnierenden Umlauferhitzer, wodurch ein erwärmter unter Druck stehender Strom erhalten wird;
- Druckentlastung des erwärmten unter Druck stehenden Stroms, wodurch ein druckentlasteter erwärmter Strom erhalten wird;
- Zurückspeisen des erhaltenen druckentlasteten erwärmten Stroms als Rückführstrom in die Reinigungskolonne in einer Ebene zwischen dem Einlass für beladenes Trockenmittel und einem Sumpfflüssigkeitspegel, so dass der druckentlastete erwärmte Strom mit dem Strom von beladenem Trockenmittel gemischt wird, so dass Wärme von dem druckentlasteten erwärmten Strom auf den Strom von beladenem Trockenmittel übertragen wird; und Gewinnen eines Teils von der Sumpfflüssigkeit als Strom von gereinigtem Trockenmittel;
- wobei das Verfahren das Strippen einer Flüssigkeit, die durch das Flashen des Stroms von beladenem Trockenmittel erhalten wurde, mit einem erwärmten Treibgas und Flashen des Rückführstroms sowie außerdem das Strippen einer Flüssigkeit, die aus dem geflashten Rückführstrom erhalten wurde, mit dem erwärmten Treibgas umfasst.

20. Verfahren nach Anspruch 19, wobei der Massenstrom des Rückführstroms, verglichen mit dem erhaltenen Strom von gereinigtem Trockenmittel zwischen 1:1 und 5:1, vorzugsweise zwischen 1,5:1 und 3:1 beträgt.

21. Verfahren nach Anspruch 19 oder 20, wobei der Teil der Sumpfflüssigkeit unter einen Druck von über 1,5 bara, vorzugsweise über 2 bara gesetzt wird.

22. Verfahren nach Anspruch 19, 20 oder 21, wobei die Temperatur des erwärmten Rückführstroms um 20-50°C, vorzugsweise 25-40°C höher ist als die Temperatur des der Kolonne zugespeisten Stroms von beladenem Trockenmittel.

23. Verfahren nach Anspruch 19, wobei das Verfahren das Erwärmen des Treibgases durch Wärmeübertragung von einem Flüssigkeitsstrom aus der Reinigungskolonne, vorzugsweise der Sumpfflüssigkeit oder der Flüssigkeit von dem geflashten Rückführstrom, umfasst.

24. Verfahren nach einem der Ansprüche 19 bis 23, wobei die Reinheit der Sumpfflüssigkeit über 99,3 w/w % beträgt.

25. Verfahren nach Anspruch 19, wobei der Massenstrom des Fluids, das gestrippt wird, verglichen mit dem Massenstrom des erhaltenen Stroms von gereinigten Trockenmittel zwischen 1:1 und 3:1, vorzugsweise zwischen 1,5:1 und 2,5:1, beträgt.

26. Verfahren nach einem der Ansprüche 19, 23 bis 25, wobei das Verfahren das Steuern der Temperatur der Flüssigkeit am Flüssigkeitseinlass zum Strippabschnitt durch Steuerung der Umwälzpumpe und des Umlauferhitzers umfasst.

27. Verfahren nach Anspruch 26, wobei die Temperatur der Flüssigkeit um weniger als +/- 1°C schwankt.

28. Verfahren nach einem der Ansprüche 19, 23 bis 27, wobei das Strippen in einem externen Behälter (244) durchgeführt wird, wobei das Verfahren das Einleiten eines Teils des rückgeführten Stroms durch einen Trockenmitteleinlass des Behälters (244) und das Zurückleiten von Flüssigkeit aus dem Strippbehälter in den Sumpfflüssigkeitsstrom umfasst.

29. Verfahren nach Anspruch 19 bis 28, wobei das Verfahren das Erwärmen des Stroms von beladenem Trockenmittel (25) mit einer Entnahme (166) der von dem Umlauferhitzer (64) erwärmten Flüssigkeit umfasst.

## Revendications

1. Système de régénération d'un déshydratant comprenant :
- une colonne de purification verticale (40) comprenant :
- une section de distillation (48),
- une admission de déshydratant riche (27) en dessous de la section de distillation, un refoulement de vapeur et de gaz d'extraction (51) au-dessus de la section de distillation et un refoulement de liquide (60) au niveau de la partie basse de la colonne de purification,
- un premier échangeur de chaleur (26, 126) pour chauffer un flux de déshydratant riche en amont de l'admission de déshydratant riche (27),
**caractérisé en ce que** le système comprend en outre :
- une pompe de recyclage (62) capable de fournir un fluide pressurisé comprenant une admission en communication fluidique avec un premier niveau de liquide dans ladite colonne en dessous de l'admission de déshydratant riche (27) et comprenant un refoulement,
- un élément chauffant de recyclage (64) avec une admission en communication fluidique avec le refoulement de la pompe de recyclage (62), et un refoulement d'élément chauffant de recyclage en communication fluidique avec ladite colonne de purification (40) via une conduite de recyclage (65), et
- une vanne ou un orifice (76) sur ladite conduite de recyclage (65) de sorte que le fluide recyclé par l'intermédiaire de l'élément chauffant de recyclage soit dépressurisé avant d'entrer dans ladite colonne de purification,
dans lequel le système comprend :
- une section d'extraction de gaz combustible (44) comprenant une admission de gaz d'extraction (75), une admission de liquide d'extraction, un refoulement de liquide d'extraction et un refoulement de gaz d'extraction, dans lequel l'admission de liquide d'extraction est en communication fluidique avec le refoulement d'élément chauffant de recyclage, le refoulement de liquide d'extraction est en communication fluidique avec l'admission de la pompe de recyclage (62), et le refoulement de gaz d'extraction est en communication fluidique avec la colonne de purification en dessous de la section de distillation.

2. Système de régénération de déshydratant selon l'une quelconque des revendications précédentes, dans lequel l'élément chauffant de recyclage (64) est un élément chauffant non stagnant, de préférence un élément chauffant électrique.

3. Système de régénération de déshydratant selon l'une quelconque des revendications précédentes, dans lequel l'élément chauffant de recyclage (64) utilise des signaux provenant d'un ou plusieurs instruments de mesure de température (87, 287, 288) dans la phase liquide (71, 171, 271) en amont de la section d'extraction (44, 244) et d'un ou plusieurs instruments de mesure de température (284, 289) dans la phase liquide (60, 63) en amont de l'élément chauffant de recyclage (64).

4. Système de régénération de déshydratant selon l'une quelconque des revendications précédentes, dans lequel le système comprend des moyens de chauffage de gaz combustible (72) pour chauffer le gaz combustible en amont de la section d'extraction de gaz combustible, dans lequel les moyens de chauffage de gaz combustible (72) sont agencés pour une communication de chaleur avec un liquide chauffé recyclé (71) renvoyé dans la colonne de purification.

5. Système de régénération de déshydratant selon la revendication 4, dans lequel les moyens de chauffage de gaz combustible (92, 96, 99) sont agencés pour une communication de chaleur avec un liquide au sein de la partie basse de la colonne de purification (40).

6. Système de régénération de déshydratant selon l'une quelconque des revendications 1 à 3, dans lequel le système comprend des moyens de chauffage de gaz combustible (172, 272) pour chauffer un gaz combustible en amont de la section d'extraction de gaz combustible (44), dans lequel les moyens de chauffage de gaz combustible (172, 272) sont agencés pour une communication de chaleur avec un soutirage (165) de liquide chauffé par l'élément chauffant de recyclage (64).

7. Système de régénération de déshydratant selon l'une quelconque des revendications précédentes, dans lequel le système comprend un moyen pour maintenir un niveau de liquide bas (90) au niveau de la partie basse de la colonne de purification ; et dans lequel la section d'extraction (44) est agencée dans la partie inférieure de la colonne de purification (40) en dessous du refoulement d'élément chauffant de recyclage (65) et au-dessus du niveau liquide bas (90).

8. Système de régénération de déshydratant selon l'une quelconque des revendications 1 à 7, dans lequel le premier échangeur de chaleur (126) pour le déshydratant riche (25) est agencé pour une communication de chaleur avec un soutirage (166) du liquide chauffé par l'élément chauffant de recyclage (64).

9. Système de régénération de déshydratant selon l'une quelconque des revendications précédentes, dans lequel la colonne (40) comprend au moins un plateau à film (42) agencé au-dessus de la section d'extraction (44) et en dessous du refoulement d'élément chauffant de recyclage (65), de sorte que le gaz d'extraction passe à travers le plateau à film (42), et dans lequel l'au moins un plateau à film comprend une conduite (80) pour un liquide passant jusqu'à un niveau en dessous du plateau à film (42).

10. Système de régénération de déshydratant selon la revendication 9, dans lequel l'aire résultante (Arep) de toutes les ouvertures à travers lesquelles tout le liquide passe est supérieure à 0,01 et inférieure à 0,2 fois l'aire en coupe de la colonne dans la section comprenant le refoulement provenant de l'élément chauffant de recyclage.

11. Système de régénération de déshydratant selon la revendication 9 ou 10, dans lequel une partie basse (83) du plateau à film (42) est la partie basse d'un second niveau de liquide et où la conduite (80) pour un passage de liquide dépasse sensiblement au-dessus de la partie basse (83) du plateau à film, où la partie haute (82) de la conduite (80) sera un niveau haut du second niveau de liquide.

12. Système de régénération de déshydratant selon l'une quelconque des revendications 9 à 11, dans lequel la colonne comprend en outre un compartiment de déshydratant (81) en dessous du plateau à film comprenant un trop-plein dans la section d'extraction (44), où le trop-plein comprend de préférence un système de répartition répartissant régulièrement le trop-plein sur l'aire de la section d'extraction.

13. Système de régénération de déshydratant selon la revendication 12, dans lequel les moyens de chauffage de gaz combustible sont agencés dans le compartiment de déshydratant (81).

14. Système de régénération de déshydratant selon l'une quelconque des revendications 1 à 13, dans lequel le système comprend un système de compression, de refroidissement et de séparation de gaz haut (152) avec une admission de gaz haut en communication fluidique avec le refoulement de gaz haut et un refoulement de gaz combustible séparé (174) en communication fluidique avec l'admission de gaz combustible (75) de la section d'extraction de sorte que le gaz combustible puisse être recyclé.

15. Système de régénération de déshydratant selon l'une quelconque des revendications précédentes, dans lequel le système de régénération comprend un filtre (32) en communication fluidique avec et agencé en aval du refoulement de liquide (60) au niveau de la partie basse de la colonne de purification.

16. Système de régénération de déshydratant selon l'une quelconque des revendications précédentes, dans lequel le système comprend un ballon tampon (34) en communication fluidique avec la partie basse de la colonne de purification et où la taille de volume du ballon tampon est plus petite que le volume de la colonne de purification en dessous du refoulement d'élément chauffant de recyclage, de préférence la taille de volume de ballon tampon est dans la plage de 1/4 à 1/8 fois la taille de volume de colonne de purification.

17. Système de régénération de déshydratant selon l'une quelconque des revendications 1 à 3, dans lequel la section d'extraction est agencée dans une cuve externe (244) où l'admission de déshydratant (277) de la cuve (244) est en communication fluidique avec le refoulement de la pompe de recyclage (62) et un refoulement de déshydratant (279) de la cuve (244) est en communication fluidique avec l'admission de la pompe de recyclage (62).

18. Système de régénération de déshydratant selon l'une quelconque des revendications 1 à 17, dans lequel la pompe de recyclage (62) est capable de fournir un fluide pressurisé avec une pression au-dessus de 1,5 bar, de préférence au-dessus de 2 bars.

19. Procédé de régénération de déshydratant obtenant ainsi un flux de déshydratant purifié à partir d'un flux de déshydratant riche, comprenant
- le chauffage du flux de déshydratant riche avec un échange de chaleur avec un flux de gaz haut,
- la distillation par détente du flux de déshydratant riche chauffé en apportant le flux de déshydratant chauffé dans une colonne de purification verticale via une admission de déshydratant riche, aboutissant au flux de gaz haut et au flux de liquide bas, dans lequel
le procédé est **caractérisé par**
- la pressurisation d'une portion du liquide bas dans une pompe de recyclage, obtenant un flux pressurisé ;
- le chauffage du flux pressurisé dans un élément chauffant de recyclage non stagnant, obtenant un flux pressurisé chauffé ;
- la dépressurisation du flux pressurisé chauffé, obtenant un flux chauffé dépressurisé ;
- l'apport du flux chauffé dépressurisé obtenu en tant que flux de recyclage de retour dans la colonne de purification à un niveau entre l'admission de déshydratant riche et un niveau de liquide bas, de sorte que le flux chauffé dépressurisé soit mélangé avec le flux de déshydratant riche de sorte que la chaleur soit transférée du flux chauffé dépressurisé au flux de déshydratant riche ; et l'obtention d'une portion du liquide bas en tant que flux de déshydratant purifié ;
- dans lequel le procédé comprend l'extraction d'un liquide obtenu par la distillation par détente du flux de déshydratant riche avec un gaz combustible chauffé et la distillation par détente du flux de recyclage, et également l'extraction d'un liquide obtenu à partir du flux de recyclage distillé par détente avec le gaz combustible chauffé.

20. Procédé selon la revendication 19, dans lequel le débit massique du flux de recyclage comparé au flux de déshydratant purifié obtenu est entre 1:1 et 5:1, de préférence entre 1,5:1 et 3:1.

21. Procédé selon la revendication 19 ou 20, dans lequel la portion du liquide bas est pressurisée au-dessus de 1,5 bar, de préférence au-dessus de 2 bars.

22. Procédé selon la revendication 19, 20, ou 21, dans lequel la température du flux de recyclage chauffé est entre 20 à 50 °C, de préférence 25 à 40 °C, plus élevée que la température du flux de déshydratant riche apporté dans la colonne.

23. Procédé selon la revendication 19, dans lequel le procédé comprend le chauffage du gaz combustible par transfert de chaleur depuis un flux de liquide provenant de la colonne de purification, de préférence le liquide bas ou le liquide provenant du flux de recyclage distillé par détente.

24. Procédé selon l'une quelconque des revendications 19 à 23, dans lequel la pureté du liquide bas est au-dessus de 99,3 % p/p.

25. Procédé selon la revendication 19, dans lequel le débit massique de fluide extrait comparé au débit massique de flux de déshydratant purifié obtenu est entre 1:1 et 3:1, de préférence entre 1,5:1 et 2,5:1.

26. Procédé selon l'une quelconque des revendications 19, 23 à 25, dans lequel le procédé comprend la régulation de la température du liquide au niveau de l'admission de liquide vers la section d'extraction en commandant la pompe de recyclage et l'élément chauffant de recyclage.

27. Procédé selon la revendication 26, dans lequel la température du liquide fluctue de moins de +/-1 °C.

28. Procédé selon l'une quelconque des revendications 19, 23 à 27, dans lequel l'extraction est réalisée dans une cuve externe (244) où le procédé comprend le passage d'une partie du flux recyclé à travers une admission de déshydratant de la cuve (244) et le passage de liquide depuis la cuve d'extraction de retour dans le flux de liquide bas.

29. Procédé selon les revendications 19 à 28, dans lequel le procédé comprend le chauffage du flux de déshydratant riche (25) avec un soutirage (166) du liquide chauffé par l'élément chauffant de recyclage (64).
